# EUROPEAN PATENT SPECIFICATION

(11) **EP 1 840 158 B1**
(45) Date of publication and mention of the grant of the patent: **18.02.2009**
(21) Application number: 05809537.3
(22) Date of filing: 28.11.2005
(51) Int. Cl.: C08J 5/12, B60C 1/00, B60C 9/00, B60C 9/20, B60C 15/06, D06M 11/83, D06M 13/50, C08L 21/00, C08K 3/00, C08K 5/00

(54) **METHOD FOR VULCANIZATION AND ADHESION OF RUBBER COMPOSITION WITH ARTICLE TO BE ADHERED BEING MADE OF BRASS OR PLATED WITH BRASS, REINFORCING MATERIAL FOR RUBBER ARTICLE, RUBBER-REINFORCING MATERIAL COMPOSITE, AND PNEUMATIC TIRE**
VERFAHREN ZUM VULKANISIEREN UND VERKLEBEN EINER KAUTSCHUKZUSAMMENSETZUNG MIT EINEM AUS MESSING BESTEHENDEN ODER MIT MESSING BESCHICHTETEN ZU VERKLEBENDEN ARTIKEL, KAUTSCHUKVERSTÄRKUNGSMATERIALVERBUND UND LUFTREIFEN
PROCÉDÉ POUR LA VULCANISATION ET L'ADHÉSION D'UNE COMPOSITION DE CAOUTCHOUC À UN ARTICLE SUR LEQUEL ELLE DOIT ADHÉRER LEQUEL EST EN LAITON OU PLAQUÉ DE LAITON, MATIÈRE RENFORÇANTE POUR UN ARTICLE EN CAOUTCHOUC, COMPOSITE DE MATIÈRE RENFORÇANT DU CAOUTCHOUC ET PNEU

(30) Priority: 02.12.2004 JP 2004349595; 14.01.2005 JP 2005007716
(43) Date of publication of application: 03.10.2007
(73) Proprietor: Bridgestone Corporation, Tokyo 104-8340 (JP); Nippon Mining & Metals Co., Ltd., Minato-ku Tokyo 105-0001 (JP)
(72) Inventor: KURIYA, Yoshinori c/o BRIDGESTONE CORPORATION, Tec, hi, Tokyo;878531 (JP)
(74) Representative: Whalley, Kevin
(86) International application number: PCT/JP2005/021820
(87) International publication number: WO 2006/059579

(56) References cited:
- EP-A- 1 470 937
- WO-A1-97/49776
- JP-A- 9 295 988
- JP-A- 9 295 989
- JP-A- 9 295 992
- JP-A- 10 007 990
- JP-A- 10 008 021
- JP-A- 11 092 482
- JP-A- 2000 297 093
- JP-A- 2001 226 642
- JP-A- 2002 363 189
- JP-A- 2004 010 487

## Description

### TECHNICAL FIELD

This invention relates to a method for vulcanization-adhering a rubber composition to an adherent made of a brass or plated with a brass, a reinforcing member for rubber article, a rubber-reinforcing member composite using such a reinforcing member for rubber article, and a pneumatic tire using such a rubber-reinforcing member composite. More particularly, it relates to a method for vulcanization-adhering a rubber composition to an adherent made of a brass or plated with a brass, which is widely used in a tire industry or the like, wherein a metal having a catalytic action to a vulcanization adhesion reaction is stably adhered to a surface of the brass through a silane coupling agent to improve the adhesion property between the rubber composition and the adherent made of the brass or plated with the brass, as well as a reinforcing member formed by subjecting a steel filament plated with the brass or a steel cord, which is formed by twisting a plurality of such steel filaments, to a surface treatment with a solution of a metal-containing silane coupling agent to improve the adhesion property to a coating rubber, and a rubber-reinforcing member composite and a pneumatic tire using such a reinforcing member for rubber article.

### RELATED ART

As to the vulcanization adhesion between the rubber composition and the brass, it has hitherto been known that sulfur in the rubber composition is reacted with copper in the brass by heating under pressure to form an adhesion layer made of copper sulfide and hence the rubber composition is adhered to the brass through such an adhesion layer. In a pneumatic tire as a typical rubber article, for example, the reinforcement of the tire is attempted by applying a rubber-reinforcing member composite, which is formed by coating a brass plated steel filament or a steel cord made by twisting a plurality of such steel filaments with rubber, to a belt or a carcass. In order to utilize the steel filament or the steel cord as a tire reinforcing member, it is required to surely adhere the steel filament or the steel cord to the coating rubber. For this end, the outer peripheral face of the steel filament is subjected to a brass plating. Also, in order to improve the adhesiveness between the steel filament or steel cord and the coating rubber, it is investigated to rationalize a ratio of copper to zinc in the brass plating applied to the steel filament, a plated thickness and so on, and a certain knowledge therefor is established.

Although the adhesiveness between the steel filament or steel cord as a reinforcing member and the coating rubber can be improved by subjecting the steel filament to the brass plating rationalized by such a knowledge, various conditions are still required for the coating rubber to be adhered with the reinforcing member. For example, in order to vulcanization-build the tire in a predetermined time, it is necessary to ensure an adhesion rate of the steel filament or steel cord as the reinforcing member to the coating rubber or a sufficient adhesive force due to the complete bonding therebetween, i.e. an initial adhesiveness between the reinforcing member and the coating rubber. It is necessary that in order to ensure the initial adhesiveness between the reinforcing member and the coating rubber, Co salt or Ni salt as an adhesion promoter is added to the coating rubber at a significant ratio, or sulfur is compounded at a high ratio of 3-8 parts by mass based on 100 parts by mass of a rubber component in the coating rubber, or the like.

However, although the adhesion promoter added to the coating rubber is effective to promote the adhesion reaction between the reinforcing member and the coating rubber, since the adhesion promoter oozes out from the uncured rubber to cause so-called blooming of chemicals, the workability in the lamination of uncured rubber sheets lowers at the tire building step and also the adhesion property or adhesiveness between the uncured rubber sheet and rubber surrounding therearound lowers, and further the residue of the adhesion promoter in a vulcanized rubber causes a cutting reaction of rubber molecule or reversion to promote the deterioration of rubber, which results in the lowering of the tire durability.

From a viewpoint of solving the above problems, in order to decrease the adhesion promoter in the coating rubber to be adhered with the reinforcing member, there is made an attempt of improving the adhesiveness between the coating rubber having no adhesion promoter or having a reduced amount of the adhesion promoter and the reinforcing member by changing the kind of the adhesion promoter, particularly the kind of organic acid for Co salt or Ni salt or by forming the adhesion promoter (cobalt metal salt) as a thin film between the coating rubber and the reinforcing member. As the latter technique, there are known, for example, a technique wherein a metal having an adhesion promoting action such as Co, Ni or the like is included into a brass plated surface as a third component (see JP-B-H01-37411, JP-A-S62-201936, JP-A-S63-56533 and JP-A-2002-13081), a technique wherein a compound including a metal having an adhesion promoting action such as Co, Ni or the like is dissolved in an oil or an organic solvent and applied to a brass plated surface to form a thin film containing the metal such as Co, Ni or the like on the brass plated surface (see JP-B-S60-35935, JP-A-H10-324753 and JP-A-2002-363874), and so on.

Moreover, since the cobalt metal salt or the like as the adhesion promoter among the above adhesion promoters is expensive, the decrease of the adhesion promoter in the coating rubber is beneficial in view of the improvement of the tire performances and the reduction of the cost compounded in the coating rubber and also important from a viewpoint of resource-saving.

### DISCLOSURE OF THE INVENTION

However, the technique proposed as a means for solving the above problems wherein the metal having the adhesion promoting action such as Co, Ni or the like is included into the brass plated surface as a third component tends to lower the adhesiveness because the release of the adhesion promoter delays in the vulcanization adhesion. Therefore, in order to improve the adhesiveness, it is required to compound the adhesion promoter containing Co or the like into the coating rubber, In this case, it is possible to somewhat reduce the amount of adhesion promoter compounded as compared with the conventional one, but the deterioration of the characteristics in the coating rubber can not be largely improved.

Also, according to the technique wherein the compound containing Co, Ni or the like is dissolved in the oil or organic solvent and applied onto the brass plated surface of the steel filament or steel cord to form the thin film containing the metal such as Co, Ni or the like on the brass plated surface, the stable adhesion is not obtained because it is difficult to stably adhere the necessary amount of the compound containing Co, Ni or the like onto the brass plated surface, and also the compound containing Co, Ni or the like diffuses into the coating rubber prior to the adhesion reaction, so that it is required to adhere the amount of the compound containing Co, Ni or the like larger than the naturally required amount onto the brass plated surface.

As to the adhesion between the brass plated steel filament or steel cord and the coating rubber as mentioned above, there should be considered the excellent initial adhesiveness but also various requirements such as no occurrence of troubles due to the deterioration of rubber material inclusive of the adhesion interface between the steel filament or steel cord and the coating rubber when the tire or industrial belt is exposed to a deteriorative environment in use, the workability at the production steps of a product, the control of the compounding coat and so on.

It is, therefore, an object of the invention to provide a reinforcing member for rubber article having an excellent adhesiveness to a coating rubber even when the coating rubber contains an amount of an adhesion promoter smaller than the conventional one or when the coating rubber does not contain the adhesion promoter. Also, it is another object of the invention to provide a rubber-reinforcing member composite using such a reinforcing member for rubber article and a pneumatic tire using such a rubber-reinforcing member composite. Further, it is the other object of the invention to provide a method for vulcanization-adhering a rubber composition to an adherent made of a brass or plated with a brass in which the stable adhesion can be obtained without lowering the adhesion property or adhesiveness between uncured rubbers and causing the reversion.

In order to achieve the above objects, the inventor has made various studies on a technique wherein a metal having an adhesion promoting action to the rubber composition and the brass such as Co, Ni or the like is stably existent at an adhesion interface between the rubber composition and the brass to more efficiently develop the catalytic action of the metal, and found that a solution of a silane coupling agent containing a metal having a catalytic action such as Co, Ni or the like is applied onto a surface of a brass as an adherent to more efficiently vulcanization-adhere a rubber composition to the brass at a slight amount of the catalytic metal smaller than the conventional one, whereby the adhesion rate and adhesion durability can be largely improved, and further the anti-aging property of rubber can be improved by completely eliminating or reducing from the rubber composition an adhesion promoter containing Co or the like, which has hitherto been compounded in the rubber composition, and also it is possible to widen the freedom degree of formulation in the rubber composition capable of adhering to the brass, and as a result, the invention has been accomplished.

That is, the method for vulcanization-adhering a rubber composition to an adherent made of a brass or plated with a brass according to the invention is characterized in that a rubber composition comprising a rubber component made from natural rubber and/or synthetic rubber and sulfur is applied onto an adherent made of a brass or plated with a brass and subjected to a surface treatment with a solution of a metal-containing silane coupling agent and adhered thereto by heating under pressure.

In a preferable embodiment of the vulcanization adhesion method according to the invention, the metal included in the silane coupling agent solution is at least one of Co, Ni, Fe and Zn having a catalytic action to the adhesion reaction between the rubber composition and the brass. Thus, the adhesion between the rubber composition and the adherent can be promoted efficiently.

In another preferable embodiment of the vulcanization adhesion method according to the invention, a source of the metal used as a starting material of the metal-containing silane coupling agent solution is a compound mainly containing Co or Ni with an oxidation number of 2 as a central metal, which is substantially soluble in a solvent used in the preparation of the solution.

In the other preferable embodiment of the vulcanization adhesion method according to the invention, the silane coupling agent used as a starting material of the metal-containing silane coupling agent solution is a hydrocarbyloxysilane compound represented by the following formula (I): 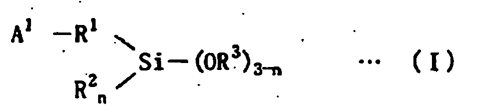 [wherein A¹ is a monovalent group with at least one functional group containing at least one heteroatom selected from oxygen, nitrogen, sulfur and phosphorus and capable of forming a complex or a salt with Co or Ni atom through the heteroatom, R¹ is a single bond or a bivalent inert hydrocarbon group, R² and R³ are independently a monovalent aliphatic hydrocarbon group having a carbon number of 1-20 or a monovalent aromatic hydrocarbon group having a carbon number of 6-18, and n is an integer of 0-2, provided that when plural OR³s are existent, these OR³s may be same or different] and/or a partial condensate thereof. In this case, it is further preferable that the functional group containing at least one heteroatom selected from oxygen, nitrogen, sulfur and phosphorus and capable of forming a complex or a salt with Co or Ni atom through the heteroatom is at least one selected from an alcohol, a thiol, a (thio)epxoy, a (thio)isocyanate, a (thio)ketone, α,γ-diketone, a (thio)aldehyde, a (dithio)carboxylic acid, a (dithio)carboxylic acid ester, a dithiocarbamic acid ester, an alkali metal salt or alkaline earth metal salt of a (thio)carboxylic acid, a carboxylic acid anhydride, a dihydrocarbyl ester of carboxylic acid carbonic acid, a primary amine, a non-cyclic or cyclic secondary amine, a non-cyclic or cyclic tertiary amine, pyridine, an imine, an amide, urea, an amidine, an imidazole, trihydrocarbyl ester of isocyanuric acid, a sulfide and multisulfide, sulfonyl, sulfinyl, nitrile, trihydrocarbylphosphine, trihydrocarbylphosphite and trihydrocarbylphosphate, and R³ in the formula (I) is a hydrocarbon group having a carbon number of 1-3 and n is 0-1.

In a further preferable embodiment of the vulcanization adhesion method according to the invention, the rubber composition is compounded with sulfur in an amount of 1-8 parts by mass based on 100 parts by mass of a rubber component. In this case, sulfur required for the vulcanization adhesion reaction is sufficiently supplied from the rubber composition while sufficiently suppressing the lowering of the resistance to thermal aging of rubber, so that the sufficient adhesive force can be ensured.

In the vulcanization adhesion method according to the invention, the adherent made of the brass or plated with the brass is preferable to have a composition ratio of copper/zinc in the brass of 58%/42%-72%/28%. In this case, copper required for the vulcanization adhesion reaction is sufficiently supplied while suppressing the lowering of heat resistance in the adhesion between the rubber composition and the adherent, so that the sufficient adhesive force can be ensured.

In the vulcanization adhesion method according to the invention, it is preferable that the rubber composition does not contain a Co metal soap substantially required as an adhesion promoter. Even if Co is included, the Co content is preferable to be not more than 0.1 part by mass based on 100 parts by mass of the rubber component. in this case, the lowering of the aging resistance of rubber can be suppressed sufficiently.

Also, the reinforcing member for rubber article according to the invention is characterized by subjecting a steel filament plated with a brass or a steel cord formed by twisting a plurality of such steel filaments to a surface treatment with a solution of a metal-containing silane coupling agent.

In a preferable embodiment of the reinforcing member for rubber article according to the invention, a metal included in the metal-containing silane coupling agent solution is at least one of Co, Ni, Fe and Zn. In this case, the adhesion between a coating rubber and a reinforcing member can be promoted efficiently.

In another preferable embodiment of the reinforcing member for rubber article according to the invention, a source of the metal used as a starting material of the metal-containing silane coupling agent solution is a compound mainly containing Co or Ni with an oxidation number of 2 as a central metal, which is substantially soluble in a solvent used in the preparation of the solution.

In the other preferable embodiment of the reinforcing member for rubber article according to the invention, the silane coupling agent used as a starting material of the metal-containing silane coupling agent solution is a hydrocarbyloxysilane compound represented by the formula (I) and/or a partial condensate thereof. In this case, it is further preferable that the functional group containing at least one heteroatom selected from oxygen, nitrogen, sulfur and phosphorus and capable of forming a complex or a salt with Co or Ni atom through the heteroatom is at least one selected from an alcohol, a thiol, a (thio)epxoy, a (thio)isocyanate, a (thio)ketone, α,γ-diketone, a (thio)aldehyde, a (dithio)carboxylic acid, a (dithio)carboxylic acid ester, a dithiocarbamic acid ester, an alkali metal salt or alkaline earth metal salt of a (thio)carboxylic acid, a carboxylic acid anhydride, a dihydrocarbyl ester of carboxylic acid carbonic acid, a primary amine, a non-cyclic or cyclic secondary amine, a non-cyclic or cyclic tertiary amine, pyridine, an imine, an amide, urea, an amidine, an imidazole, trihydrocarbyl ester of isocyanuric acid, a sulfide and multisulfide, sulfonyl, sulfinyl, nitrile, trihydrocarbylphosphine, trihydrocarbylphosphite and trihydrocarbylphosphate, and R³ in the formula (I) is a hydrocarbon group having a carbon number of 1-3 and n is 0-1.

In a further preferable embodiment of the reinforcing member for rubber article according to the invention, the brass plated layer in the steel filament is preferable to have a composition ratio of copper/zinc of 58%/42%-72%/28%. In this case, the steel filament has a sufficient wire drawability but also can sufficiently ensure the resistance to moist heat adhesion and resistance to humidity adhesion.

In the reinforcing member for rubber article according to the invention, the brass plated layer in the steel filament is preferable to have an average thickness of 0.13 µm-0.35 µm. Thus, the initial adhesiveness between the reinforcing member for rubber article and the coating rubber can be ensured sufficiently, and also there can be prevented the adhesion reaction between the reinforcing member for rubber article and the coating rubber from excessively promoting due to heat in use.

In the reinforcing member for rubber article according to the invention, it is preferable that an amount of phosphorus included as an oxide in a surface layer region of the steel filament ranging from the brass plated surface to a depth of 5 nm inward in the radial direction of the filament is suppressed to not more than 1.5 atomic%.

In the reinforcing member for rubber article according to the invention, the steel filament is preferable to have a diameter of not more than 0.40 mm. In this case, when the rubber article used is subjected to strain under the bending deformation repeatedly, the surface strain is small, and the buckling and fatigue fracture can be suppressed.

Furthermore, the rubber-reinforcing member composite according to the invention is formed by coating the reinforcing member for rubber article with a rubber composition comprising 1-8 parts by mass of sulfur based on 100 parts by mass of a rubber component made from natural rubber and/or synthetic rubbers.

In the rubber-reinforcing member composite according to the invention, it is preferable that not less than 50% by mass of the rubber component in the rubber composition is natural rubber. In this case, the adhesion property between the reinforcing member and the coating rubber and the fracture properties of the composite can be improved.

In the rubber-reinforcing member composite according to the invention, it is preferable that the synthetic rubber in the rubber component of the rubber composition is at least one selected from the group consisting of styrene-butadiene rubber, butadiene rubber, butyl rubber, halogenated butyl rubber, butyl rubber having a paramethylstyrene group, ethylene-propylene-diene rubber and isoprene rubber. In this case, the resistance to heat aging in the rubber-reinforcing member composite can be improved. The styrene-butadiene rubber is preferable to be a solution-polymerized styrene-butadiene rubber having a vinyl bond content in butadiene portion of 35-85% by mass and a bound styrene content of not more than 30% by mass. Also, the butadiene rubber is preferable to have a vinyl bond content of 1-85% by mass.

Moreover, the pneumatic tire according to the invention comprises a carcass comprised of one or more carcass plies and a belt disposed at an outside of the carcass in a radial direction and comprised of one or more belt layers and further optionally contains one or more chafers, an insert, a cap and a layer, in which the rubber-reinforcing member composite is applied to at least one of the carcass plies and belt layers, or the rubber-reinforcing member composite is applied to at least one of the chafers, insert, cap and layer.

According to the invention, there can be provided a novel method for vulcanization-adhering the rubber composition to the adherent made of the brass or plated with the brass in which the adhesion is stable without deteriorating the adhesiveness and adhesion property between uncured rubbers and causing the reversion and the initial adhesion property and resistance to heat adhesion are excellent.

Also, according to the invention, there can be provided a reinforcing member for rubber article in which the adhesion property to a coating rubber is improved by subjecting a steel filament plated with a brass or a steel cord to a surface treatment with a metal-containing silane coupling agent solution even when the coating rubber contains an amount of an adhesion promoter smaller than the conventional one or when the coating rubber does not contain the adhesion promoter. Furthermore, there can be provided a rubber-reinforcing member composite having a high adhesion property between the coating rubber and the reinforcing member and an excellent durability as well as a pneumatic tire having a high durability by applying the rubber-reinforcing member composite to at least a part of belt layers in the belt and carcass plies in the carcass.

### BRIEF DESCRIPTION OF THE DRAWINGS

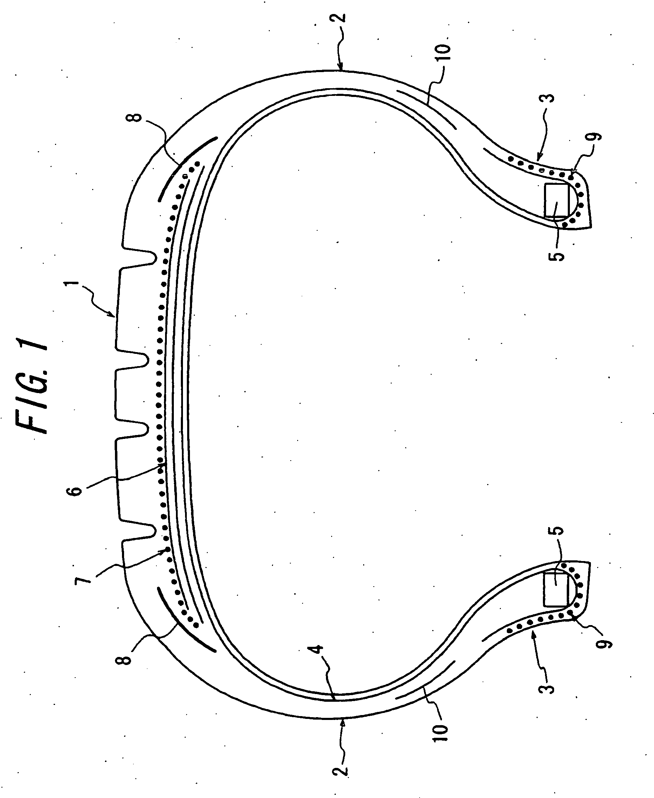

FIG. 1 is a section view of an embodiment of the pneumatic tire according to the invention.

### BEST MODE FOR CARRYING OUT THE INVENTION

### <Vulcanization-adhesion method between rubber composition and adherent made from brass or plated with brass>

The vulcanization-adhesion method according to the invention will be described in detail below. The vulcanization-adhesion method according to the invention is characterized in that a rubber composition comprising a rubber component made from natural rubber and/or synthetic rubber and sulfur is applied onto an adherent made of a brass or plated with a brass and subjected to a surface treatment with a solution of a metal-containing silane coupling agent and adhered thereto by heating under pressure.

In the vulcanization-adhesion method according to the invention, the adherent is subjected to the surface treatment with the metal-containing silane coupling agent solution, whereby the metal having a catalytic action to the adhesion reaction between the rubber composition and the brass can be stably placed on the surface of the adherent. Therefore, according to the vulcanization-adhesion method of the invention, the metal is stably and selectively existent on the adhesion interface between the rubber composition and the brass, the rubber composition can be efficiently adhered to the adherent by using a smaller amount of the metal having the adhesion promoting action as compared with the conventional adhesion method. Also, since the initial adhesion property between the rubber composition and the adherent is high, the resistance to heat adhesion between the rubber composition and the adherent can be improved by removing or decreasing the adhesion promoter containing Co or the like from the rubber composition, and also the reversion can be prevented to improve the aging property of rubber or the chemical blooming can be prevented to prevent the deterioration of the adhesiveness and adhesion property between uncured rubbers. Furthermore, in the vulcanization-adhesion method according to the invention, the efficiency of the adhesion reaction is high, so that it is not necessary to add the adhesion promoter to the rubber composition and also the sufficient adhesion is obtained even if the amount of sulfur compounded in the rubber composition is decreased. Therefore, even in the rubber composition having such a compounding that it is impossible to conduct the adhesion to brass in the conventional technique, there can be conducted the adhesion to the adherent made from the brass or plated with the brass, and the freedom degree of the compounding in the rubber composition capable of adhering to the brass can be largely increased.

In the vulcanization-adhesion method according to the invention, as the metal included in the silane coupling agent solution are mentioned Co, Ni, Fe, Zn and the like having a catalytic action to the adhesion reaction between the rubber composition and the brass. Among them, Co and Ni are particularly preferable in view that the catalytic action to the adhesion reaction is excellent. It is preferable that these metals are added to the silane coupling agent solution in the form of an organic acid salt.

As the silane coupling agent used as a starting material of the metal-containing silane coupling agent solution are preferably used a hydrocarbyloxy silane compound represented by the formula (I) and/or a partial condensate thereof. In the formula (I), A¹ is at least one functional group containing at least one heteroatom selected from oxygen, nitrogen, sulfur and phosphorus and capable of forming a complex or a salt with Co or Ni atom through the heteroatom, which preferably contains at least one selected from an alcohol, a thiol, a (thio)epoxy, a (thio)isocyanate, a (thio)ketone, a,γ-diketone, a (thio)aldehyde, a (dithio)carboxylic acid, a (dithio)carboxylic acid ester, a dithiocarbamic acid ester, an alkali metal salt or alkaline earth metal salt of a (thio)carboxylic acid, a carboxylic acid anhydride, a dihydrocarbyl ester of carboxylic acid carbonic acid, a primary amine, a non-cyclic or cyclic secondary amine, a non-cyclic or cyclic tertiary amine, pyridine, an imine, an amide, urea, an amidine, an imidazole, trihydrocarbyl ester of isocyanuric acid, a sulfide and multisulfide, sulfonyl, sulfinyl, nitrile, trihydrocarbylphosphine, trihydrocarbylphosphite and trihydrocarbylphosphate. And also, R¹ in the formual (I) is a single bond or a bivalent hydrocarbon group. As the bivalent hydrocarbon group are mentioned methylene group, ethylene group, trimethylene group, tetramethylene group, pentamethylene group, hexamethylene group, octamethylene group, decamethylene group, dodecamethylene group and the like. Further, R² and R³ are independently a monovalent aliphatic hydrocarbon group having a carbon number of 1-20 or a monovalent aromatic hydrocarbon group having a carbon number of 6-18, and concretely includes methyl group, ethyl group, n-propyl group, isopropyl group, n-butyl group, isobutyl group, sec-butyl group, tert-butyl group, pentyl group, hexyl group, octyl group, decyl group, dodecyl group, cyclopentyl group, cyclohexyl group, vinyl group, propenyl group, allyl group, hexenyl group, octenyl group, cyclopentenyl group, cyclohexenyl group, phenyl group, tolyl group, xylyl group, Naphthyl group, benzyl group, phenethyl group, Naphthylmethyl group and the like. Moreover, R³ in the formula (I) is preferable to be a hydrocarbon group having a carbon number of 1-3 and n is 0-1.

As the silane coupling agent are concretely mentioned methyltrimethoxysilylpropyl ketone, methyltrimethoxysilylbutyl ketone, methyltrimethoxysilylpentyl ketone, methyltrimethoxysilylhexyl ketone, methyltrimethoxysilylheptyl ketone, methyltrimethoxysilyloctyl ketone, methyltrimethoxysilylnonyl ketone, methylmethyldimethoxysilylpropyl ketone, methylmethyldimethoxysilylbutyl ketone, methylmethyldimethoxysilylpentyl ketone, methylmethyldimethoxysilylhexyl ketone, methylmethyldimethoxysilylheptyl ketone, methylmethyldimethoxysilyloctyl ketone, methylmethyldimethoxysilylnonyl ketone, methyltriethoxysilylpropyl ketone, methyltriethoxysilylbutyl ketone, methyltriethoxysilylpentyl ketone, methyltriethoxysilylhexyl ketone, methyltriethoxysilylheptyl ketone, methyltriethoxysilyloctyl ketone, methyltriethoxysilylnonyl ketone, methylmethyldiethoxysilylpropyl ketone, methylmethyldiethoxysilylbutyl ketone, methylmethyldiethoxysilylpentyl ketone, methylmethyldiethoxysilylhexyl ketone, methylmethyldiethoxysilylheptyl ketone, methylmethyldiethoxysilyloctyl ketone, methylmethyldiethoxysilylnonyl ketone, methytris(methoxyethoxyethoxy)silyl propyl ketone, methyltris(methoxyethoxyethoxy)silyl butyl ketone, methyltris(methoxyethoxyethoxy)silyl pentyl ketone, methyltris(methoxyethoxyethoxy)silyl hexyl ketone, methyltris(methoxyethoxyethoxy)silyl heptyl ketone, methyltris(methoxyethoxyethoxy)silyl octyl ketone, methyltris(methoxyethoxyethoxy)silyl nonyl ketone, ethyltrimethoxysilyl propyl ketone, ethyltrimethoxysilylbutyl ketone, ethyltrimethoxysilylpentyl ketone, ethyltrimethoxysilylhexyl ketone, ethyltrimethoxysilylheptyl ketone, ethyltrimethoxysilyloctyl ketone, ethyltrimethoxysilylnonyl ketone, ethylmethyldimethoxysilylpropyl ketone, ethylmethyldimethoxysilyl butyl ketone, ethylmethyldimethoxysilylpentyl ketone, ethylmethyldimethoxysilylhexyl ketone, ethylmethyldimethoxysilylheptyl ketone, ethylmethyldimethoxysilyloctyl ketone, ethylmethyldimethoxysilylnonyl ketone, ethyltriethoxysilylpropyl ketone, ethyltriethoxysilylbutyl ketone, ethyltriethoxysilylpentyl ketone, ethyltriethoxysilylhexyl ketone, ethyltriethoxysilylheptyl ketone, ethyltriethoxysilyloctyl ketone, ethyltriethoxysilylnonyl ketone, ethylmethyldiethoxysilylpropyl ketone, ethylmethyldiethoxysilylbutyl ketone, ethylmethyldiethoxysilylpentyl ketone, ethylmethyldiethoxysilylhexyl ketone, ethylmethyldiethoxysilylheptyl ketone, ethylmethyldiethoxysilyloctyl ketone, ethylmethyldiethoxysilylnonyl ketone, ethyltris(methoxyethoxyethoxy)silyl propyl ketone, ethyltris(methoxyethoxyethoxy)silyl butyl ketone, ethyltris(methoxyethoxyethoxy)silyl pentyl ketone, ethyltris(methoxyethoxyethoxy)silyl hexyl ketone, ethyltris(methoxyethoxyethoxy)silyl hetpyl ketone, ethyltris(methoxyethoxyethoxy)silyl octyl ketone, ethyltris(methoxyethoxyethoxy)silyl nonyl ketone, bis 3-trimethoxysilylpropyl sulfide, bis 3-trimethoxysilylpropyl disulfide, bis 3-trimethoxypropyl trisulfide, bis 3-trimethoxysilylpropyl tetrasulfide, bis 3-methyldimethoxysilylpropyl sulfide, bis 3-methyldimethoxysilylpropyl disulfide, bis 3-methyldimethoxysilylpropyl trisulfide, bis 3-methyldimethoxysilylpropyl tetrasulfide, bis 3-triethoxysilylpropyl sulfide, bis 3-triethoxysilylpropyl disulfide, bis 3-triethoxysilylpropyl trisulfide, bis 3-triethoxysilylpropyl tetrasulfide, bis 3-methyldiethoxysilylpropyl sulfide, bis 3-methyldiethoxysilylpropyl disulfide, bis 3-methyldiethoxysilylpropyl trisulfide, bis 3-methyldiethoxysilylpropyl tetrasulfide, 3-trimethoxysilylpropionamide, 3-trimethoxysilylpropionimide amide, 3-methyldimethoxysilylpropionamide, 3-methyldimethoxysilylpropionimide amide, 3-triethoxysilylpropionamide, 3-triethoxysilylpropionimide amide, 3-methyldiethoxysilylpropionamide, 3-methyldiethoxysilytpropionimide amide, 3-(triethoxysilyl)propyl(methyl)azane, 3-(triethoxysilyl)propyl(ethyl)azane, 3-(triethoxysilyl)propyl(phenyl)azane, 3-(triethoxysilyl)propyl(benzyl)azane, 3-(trimethoxysilyl)propyl(methyl)azane, 3-(trimethoxysilyl)propyl(ethyl)azane, 3-(trimethoxysilyl)propyl(phenyl)azane, 3-(trimethoxysilyl)propyl(benzyl)azane, 3-(dimethylethoxysilyl)propyl(methyl)azane, 3-(dimethylethoxysilyl)propyl(ethyl)azane, 3-(dimethylethoxysilyl)propyl(phenyl)azane, 3-(dimethylethoxysilyl)propyl(benzyl)azane, 3-(dimeethylmethoxysilyl)propyl(methyl)azane, 3-(dimethylmethoxysilyl)propyl(ethyl)azane, 3-(dimethylmethoxysilyl)propyl(phenyl)azane, 3-(dimethylmethoxysilyl)propyl(benzyl)azane, N-methyltrimethoxy silane, N-methylmethyldimethoxy silane; N-methyltriethoxy silane, N-methylmethyldiethoxy silane, N-ethyltrimethoxy silane, N-ethylmethyldimethoxy silane, N-ethyltriethoxy silane, N-ethylmethyldiethoxy silane, N-propyltrimethoxy silane, N-propylmethyldimethoxy silane, N-propyltriethoxy silane, N-propylmethyldiethoxy silane, N-pentyltrimethoxy silane, N-pentylmethyldimethoxy silane, N-pentyltriethoxy silane, N-pentylmethyldiethoxy silane, N-hexyltrimethoxy silane, N-hexylmethyldimethoxy silane, N-hexyltriethoxy silane, N-hexylmethyldiethoxy silane, N-isopropyltrimethoxy silane, N-isopropylmethyldimethoxy silane, N-isopropyltriethoxy silane, N-isopropylmethyldiethoxy silane, N-cyclohexyltrimethoxy silane, N-cyclohexly;methyldimethoxy silane, N-cyclohexyltriethoxy silane, N-cyclohexylmethyldiethoxy silane, N,N-dimethyltrimethoxy silane, N,N-dimethylmethyldimethoxy silane, N,N-dimethyltriethoxy silane, N,N-dimethylmethyldiethoxy silane, N,N-diethyltrimethoxy silane, N,N-diethylmethyldimethoxy silane, N,N-diethyltriethoxy silane, N,N-diethylmethyldiethoxy silane, N,N-dipropyltrimethoxy silane, N,N-dipropylmethyldimethoxy silane, N,N-dipropyltriethoxy silane, N,N-dipropylmethyldiethoxy silane, N,N-dipentyltrimethoxy silane, N,N-dipentylmethyldimethoxy silane, N,N-dipentyltriethoxy silane, N,N-dipentylmethyldiethoxy silane, N,N-dihexyltrimethoxy silane, N,N-dihexylmethyldimethoxy silane, N,N-dihexyltriethoxy silane, N,N-dihexylmethyldiethoxy silane, N-ethyl,N-methyltrimethoxy silane, N-ethyl,N-methylmethyldimethoxy silane, N-ethyl,N-methyltriethoxy silane, N-ethyl,N-methylmethyldiethoxy silane, N-propyl,N-methyltrimethoxy silane, N-propyl,N-methylmethyldimethoxy silane, N-propyl,N-methyltriethoxy silane, N-propyl,N-methylmethyldiethoxy silane, N-ethyl,N-propyltrimethoxy silane, N-ethyl,N-propylmethyldimethoxy silane, N-ethyl,N-propyltriethoxy silane, N-ethyl,N-propylmethyldiethoxy silane, methyl 3-trimethoxysilyl dithiocarbamate, methyl 3-methyldimethoxysilyl dithiocarbamate, methyl 3-triethoxysilyl dithiocarbamate, methyl 3-methyldiethoxysilyl dithiocarbamate, ethyl 3-trimethoxysilyl dithiocarbamate, ethyl 3-methyldimethoxysilyl dithiocarbamate, ethyl 3-triethoxysilyl dithiocarbamate, ethyl 3-methyldiethoxysilyl dithiocarbamate, butyl 3-trimethoxysilyl dithiocarbamate, butyl 3-methyldimethoxysilyl dithiocarbamate, butyl 3-triethoxysilyl dithiocarbamate, butyl 3-methyldiethoxysilyl dithiocarbamate, pentyl 3-trimethoxysilyl dithiocarbamate, pentyl 3-methyldimethoxysilyl dithiocarbamate, pentyl 3-triethoxysilyl dithiocarbamate, pentyl 3-methyldiethoxysilyl dithiocarbamate, hexyl 3-trimethoxysilyl dithiocarbamate, hexyl 3-methyldimethoxysilyl dithiocarbamate, hexyl 3-triethoxysilyl dithiocarbamate, hexyl 3-methyldiethoxysilyl dithiocarbamate, sodium 3-trimethoxysilyl dithiocarbamate, sodium 3-methyldimethoxysilyl dithiocarbamate, sodium 3-triethoxysilyl dithiocarbamate, sodium 3-methyldiethoxysilyl dithiocarbamate, 3-timethoxysilylpropyl 2-pyridinecarboxylate, 3-trimethoxysilylpropyl 4-pyridinecarboxylate, 3-trimethoxysilylpropyl 2-pyridylacetate, 3-trimethoxysilylpropyl 4-pyridylacetate, 3-methyldimethoxysilylpropyl 2-pyridinecarboxylate, 3-methyldimethoxysilylpropyl 4-pyridinecarboxylate, 3-methyldimethoxysilylpropyl 2-pyridylacetate, 3-methyldimethoxysilylpropyl 4-pyridylacetate, 3-triethoxysilylpropyl 2-pyridinecarboxylate, 3-triethoxysilylpropyl 4-pyridinecarboxylate, 3-triethoxysilylpropyl 2-pyridylacetate, 3-triethoxysilylpropyl 4-pyridylacetate, 3-methyldiethoxysilylpropyl 2-pyridinecarboxylate, 3-methyldiethoxysilylpropyl 4-pyridinecarboxylate, 3-methyldiethoxysilylpropyl 2-pyridylacetate, 3-methyldiethoxysilylpropyl 4-pyridylacetate, 3-tris(methoxyethoxyethoxy)silylpropyl 2-pyridinecarboxylate, 3-tris(methoxyethoxyethoxy)silylpropyl 4-pyridinecarboxylate, 3-tris(methoxyethoxyethoxy)silylpropyl 2-pyridylacetate, 3-tris(methoxyethoxyethoxy)silylpropyl 4-pyridylacetate, trimethoxysilylmethyl 2-pyridinecarboxylate, trimethoxysilylmethyl 4-pyridinecarboxylate, trimethoxymethyl 2-pyridylacetate, trimethoxysilylmethyl 4-pyridylacetate, methyldimethoxysilylmethyl 2-pyridinecarboxylate, methyldimethoxysilylmethyl 4-pyridinecarboxylate, methyldimethoxysilylmethyl 2-pyridylacetate, methyldimethoxysilylmethyl 4-pyridylacetate, triethoxysilylmethyl 2-pyridinecarboxylate, triethoxysilylmethyl 4-pyridinecarboxylate, triethoxysilylmethyl 2-pyridylacetate, triethoxysilylmethyl 4-pyridylacetate, methyldiethoxysilylmethyl 2-pyridinecarboxylate, methyldiethoxysilylmethyl 4-pyridinecarboxylate, methyldiethoxysilylmethyl 2-pyridylacetate, methyldiethoxysilylmethyl 4-pyridylacetate, tris(methoxyethoxyethox)silylmethyl 2-pyridinecarboxylate, tris(methoxyethoxyethoxy)silylmethyl 4-pyridinecarboxylate, tris(methoxyethoxyethoxy)silylmethyl 2-pyridylacetate, tris(methoxyethoxyethoxy)silylmethyl 4-pyridylacetate, 2-trimethoxysilylethyl 2-pyridinecarboxylate, 2-trimethoxyethyl 4-pyridinecarboxylate, 2-trimethoxysilylethyl 2-pyridylacetate, 2-trimethoxysilylethyl 4-pyridylacetate, 2-methyldimethoxysilylethyl 2-pyridinecarboxylate, 2-methyldimethoxysilylethyl 4-pyridinecarboxylate, 2-methyldimethoxysilylethyl 2-pyridylacetate, 2-methyldimethoxysilylethyl 4-pyridylacetate, 2-tiethoxysilylethyl 2-pyridinecarboxylate, 2-triethoxysilylethyl 4-pyridinecarboxylate, 2-triethoxysilylethyl 2-pyridylacetate, 2-triethoxysilylethyl 4-pyridylacetate, 2-methyldiethoxysilylethyl 2-pyridinecarboxylate, 2-methyldiethoxysilylethyl 4-pyridinecarboxylate, 2-methyldiethoxysilylethyl 2-pyridylacetate, 2-methyldiethoxysilylethyl 4-pyridylacetate, 2-tris(methoxyethoxyethoxy)silylethyl 2-pyridinecarboxylate, 2-tris(methoxyethoxyethoxy)silylethyl 4-pyridinecarboxylate, 2-tris(methoxyethoxyethoxy)silylethyl 2-pyridylacetate, 2-tris(methoxyethoxyethoxy)silylethyl 4-pyridylacetate, trimethoxysilyl acetoaldehyde, methyldimethoxysilyl acetoaldehyde, triethoxysilyl acetoaldehyde, methyldiethoxysilyl acetoaldehyde, trimethoxysilyl propionaldehyde, methyldimethoxysilyl propionaldehyde, triethoxysilyl propionaldehyde, methyldiethoxysilyl propionaldehyde, trimethoxysilyl butylaldehyde, methyldimethoxysilyl butylaldehyde, triethoxysilyl butylaldehyde, methyldiethoxysilyl butylaldehyde, trimethoxysilyl acetothioaldehyde, methyldimethoxysilyl acetothioaldehyde, triethoxysilyl acetothioaldehyde, methyldiethoxysilyl acetothioaldehyde, trimethoxysilyl propionthioaldehyde, methyldimethoxysilyl propionthioaldehyde, triethoxysilyl propionthioaldehyde, methyldiethoxysilyl propionthioaldehyde, trimethoxysilyl butylthioaldehyde, methyldimethoxysilyl butylthioaldehyde, triethoxysilyl butylthioaldehyde, methyldiethoxysilyl butylthioaldehyde, trimethoxysilyl acetate, methyldimethoxysilyl acetate, triethoxysilyl acetate, methyldiethoxysilyl acetate, sodium trimethoxysilyl propanate, sodium methyldimethoxysilyl propanate, sodium triethoxysilyl propanate, sodium methyldiethoxysilyl propanate, sodium trimethoxysilyl butanate, sodium methyldimethoxysilyl butanate, sodium triethoxysilyl butanate, sodium methyldiethoxysilyl butanate, sodium trimethoxysilyl pentanate, sodium methyldimethoxysilyl pentanate, sodium triethoxysilyl pentanate, sodium methyldiethoxysilyl pentanate, sodium trimethoxysilyl hexanate, sodium methyldimethoxysilyl hexanate, sodium triethoxysilyl hexanate, sodium methyldiethoxysilyl hexanate, sodium trimethoxysilyl thioacetate, sodium methyldimethoxysilyl thioacetate, sodium triethoxysilyl thioacetate, sodium methyldiethoxysilyl thioacetate, sodium trimethoxysilyl thiopropanate, sodium methyldimethoxysilyl thiopropanate, sodium triethoxysilyl thiopropanate, sodium methyldiethoxysilyl thiopropanate, sodium trimethoxysilyl thiobutanate, sodium methyldimethoxysilyl thiobutanate, sodium triethoxysilyl thiobutanate, sodium methyldiethoxysilyl thiobutanate, sodium trimethoxysilyl thiopentanate, sodium methyldimethoxysilyl thiopentanate, sodium triethoxysilyl thiopentanate, methyldiethoxysilyl thiopentanate, potassium trimethoxysilyl acetate, potassium methyldimethoxysilyl acetate, potassium triethoxysilyl acetate, potassium methyldiethoxysilyl acetate, potassium trimethoxysilyl propanate, potassium methyldimethoxysilyl propanate, potassium triethoxysilyl propanate, potassium methyldiethoxysilyl propanate, potassium trimethoxysilyl butanate, potassium methyldimethoxysilyl butanate, potassium triethoxysilyl butanate, potassium methyldiethoxysilyl butanate, potassium trimethoxysilyl pentanate, potassium methyldimethoxysilyl pentanate, potassium triethoxysilyl pentanate, potassium methyldiethoxysilyl pentanate, potassium trimethoxysilyl hexanate, potassium methyldimethoxysilyl hexanate, potassium triethoxysilyl hexanate, potassium methyldiethoxysilyl hexanate, potassium trimethoxysilyl thioacetate, potassium methyldimethoxysilyl thioacetate, potassium triethoxysilyl thioacetate, potassium methyldiethoxysilyl thioacetate, potassium trimethoxysilyl thiopropanate, potassium methyldimethoxysilyl thiopropanate, potassium triethoxysilyl thiopropanate, potassium methyldiethoxysilyl thiopropanate, potassium trimethoxysilyl thiobutanate, potassium methyldimethoxysilyl thiobutanate, potassium triethoxysilyl thiobutanate, potassium methyldiethoxysilyl thiobutanate, lithium trimethoxysilyl acetate, lithium methyldimethoxysilyl acetate, lithium triethoxysilyl acetate, lithium methyldiethoxysilyl acetate, lithium trimethoxysilyl propanate, lithium methyldimethoxysilyl propanate, lithium triethoxysilyl propanate, lithium methyldiethoxysilyl propanate, lithium trimethoxysilyl butanate, lithium methyldimethoxysilyl butanate, lithium triethoxysilyl butanate, lithium methyldiethoxysilyl butanate, lithium trimethoxysilyl pentanate, lithium methyldimethoxysilyl pentanate, lithium triethoxysilyl pentanate, lithium methyldiethoxysilyl pentanate, lithium trimethoxysilyl hexanate, lithium methyldimethoxysilyl hexanate, lithium triethoxysilyl hexanate, lithium methyldiethoxysilyl hexanate, lithium trimethoxysilyl thioacetate, lithium methyldimethoxysilyl thioacetate, lithium triethoxysilyl thioacetate, lithium methyldiethoxysilyl thioacetate, lithium trimethoxysilyl thiopropanate, lithium methyldimethoxysilyl thiopropanate, lithium triethoxysilyl thiopropanate, lithium methyldiethoxysilyl thiopropanate, lithium trimethoxysilyl thiobutanate, lithium methyldimethoxysilyl thiobutanate, lithium triethoxysilyl thiobutanate, lithium methyldiethoxysilyl thiobutanate, trimethoxysilyl thiopentanic acid, methyldimethoxysilyl thiopentanic acid, triethoxysilyl thiopentanic acid, methyldiethoxysilyl thiopentanic acid, methyl triethoxysilyl acetate, methyl methyldimethoxysilyl acetate, methyl triethoxysilyl acetate, methyl methyldiethoxysilyl acetate, methyl trimethoxysilyl propanate, methyl methyldimethoxysilyl propanate, methyl triethoxysilyl propanate, methyl methyldimethoxysilyl propanate, methyl triethoxysilyl propanate, methyl methyldiethoxysilyl propanate, methyl trimethoxysilyl butanate, methyl methyldimethoxysilyl butanate, methyl triethoxysilyl butanate, methyl methyldiethoxysilyl butanate, methyl trimethoxysilyl pentanate, methyl methyldimethoxysilyl pentanate, methyl triethoxysilyl pentanate, methyl methyldiethoxysilyl pentanate, methyl trimethoxysilyl hexanate, methyl methyldimethoxysilyl hexanate, methyl triethoxysilyl hexanate, methyl methyldiethoxysilyl hexanate, methyl trimethoxysilyl thioacetate, methyl methyldimethoxysilyl thioacetate, methyl triethoxysilyl thioacetate, methyl methyldimethoxysilyl thioacetate, methyl methyldiethoxysilyl thioacetate, methyl trimethoxysilyl thiopropanate, methyl methyldimethoxysilyl thiopropanate, methyl triethoxysilyl thiopropanate, methyl methyldiethoxysilyl thiopropanate, methyl trimethoxysilyl thiobutanate, methyl methyldimethoxysilyl thiobutanate, methyl triethoxysilyl thiobutanate, methyl methyldiethoxysilyl thiobutanate, methyl trimethoxysilyl thiopentanate, methyl methyldimethoxysilyl thiopentanate, methyl triethoxysilyl thiopentanate, methyl methyldiethoxysilyl thiopentanate, methyl trimethoxysilyl dithioacetate, methyl methyldimethoxysilyl dithioacetate, methyl triethoxysilyl dithioacetate, methyl methyldiethoxysilyl dithioacetate, methyl trimethoxysilyl dithiopropanate, methyl methyldimethoxysilyl dithiopropanate, methyl triethoxysilyl dithiopropanate, methyl methyldiethoxysilyl dithiopropanate, methyl trimethoxysilyl dithiobutanate, methyl methyldimethoxysilyl dithiobutanate, methyl triethoxysilyl dithiobutanate, methyl methyldiethoxysilyl dithiobutanate, methyl trimethoxysilyl dithiopentanate, methyl methyldimethoxysilyl dithiopentanate, methyl triethoxysilyl dithiopentanate, methyl methyldiethoxysilyl dithiopentanate, ethyl trimethoxysilyl acetate, ethyl methyldimethoxysilyl acetate, ethyl triethoxysilyl acetate, ethyl methyldiethoxysilyl acetate, ethyl trimethoxysilyl propanate, ethyl methyldimethoxysilyl propanate, ethyl triethoxysilyl propanate, ethyl methyldimethoxysilyl propanate, ethyl triethoxysilyl propanate, ethyl methyldiethoxysilyl propanate, ethyl trimethoxysilyl butanate, ethyl methyldimethoxysilyl butanate, ethyl triethoxysilyl butanate, ethyl methyldiethoxysilyl butanate, ethyl trimethoxysilyl pentanate, ethyl methyldimethoxysilyl pentanate, ethyl triethoxysilyl pentanate, ethyl methyldiethoxysilyl pentanate, ethyl trimethoxysilyl hexanate, ethyl methyldimethoxysilyl hexanate, ethyl triethoxysilyl hexanate, ethyl methyldiethoxysilyl hexanate, ethyl trimethoxysilyl thioacetate, ethyl methyldimethoxysilyl thioacetate, ethyl triethoxysilyl thioacetate, ethyl methyldimethoxysilyl thioacetate, ethyl methyldiethoxysilyl thioacetate, ethyl trimethoxysilyl thiopropanate, ethyl methyldimethoxysilyl thiopropanate, ethyl triethoxysilyl thiopropanate, ethyl methyldiethoxysilyl thiopropanate, ethyl trimethoxysilyl thiobutanate, ethyl methyldimethoxysilyl thiobutanate, ethyl triethoxysilyl thiobutanate, ethyl methyldiethoxysilyl thiobutanate, ethyl trimethoxysilyl thiopentanate, ethyl methyldimethoxysilyl thiopentanate, ethyl triethoxytsilyl thiopentanate, ethyl methyldiethoxysilyl thiopentanate, ethyl trimethoxysilyl dithioacetate, ethyl methyldimethoxysilyl dithioacetate, ethyl triethoxysilyl dithioacetate, ethyl methyldiethoxysilyl dithioacetate, ethyl trimethoxysilyl dithiopropanate, ethyl methyldimethoxysilyl dithiopropanate, ethyl triethoxysilyl dithiopropanate, ethyl methyldiethoxysilyl dithiopropanate, ethyl trimethoxysilyl dithiobutanate, ethyl methyldimethoxysilyl dithiobutanate, ethyl triethoxysilyl dithiobutanate, ethyl methyldiethoxysilyl dithiobutanate, ethyl trimethoxysilyl dithiopentanate, ethyl methyldimethoxysilyl dithiopentanate, ethyl triethoxysilyl dithiopentanate, ethyl methyldiethoxysilyl dithiopentanate, 3,3'-bis(triethoxysilyl)propionic acid anhydride, 3-glycidoxypropyltrimethoxy silane, 3-glycidoxypropylmethyldimethoxy silane, 3-glycidoxypropyltriethoxy silane, 3-glycidoxypropylmethyldiethoxy silane, 3-(2-aminoethyl)aminopropyltrimethoxy silane, 3-(2-aminoethyl)aminopropylmethyldimethoxy silane, 3-(2-aminoethyl)aminopropyltriethoxy silane, 3-(2-aninoethyl)aminopropylmethyldiethoxy silane, 3-imidazolylpropyltrimethoxy silane, 3-imidazolylpropylmethyldimethox silane, 3-imidazolinopropyltriethoxy silane, 3-imidazolylpropylmethyldiethoxy silane, 3-mercaptopropyltrimethoxy silane, 3-mercaptopropylmethyldimethoxy silane, 3-mercaptopropyltriethoxy silane, 3-mercaptopropylmethyldiethoxy silane, 3-hydroxypropyltrimethoxy silane, 3-hydroxypropylmethyldimethoxy silane, 3-hydroxypropyltriethoxy silane, 3-mercaptopropylmethyldiethoxy silane, 5,6-epoxyhexyltrimethoxy silane, 5,6-epoxyhexylmethyldimethoxy silane, 5,6-epoxyhexyltriethoxy silane, 5,6-epoxyhexylmethyldiethoxy silane, 3,4-epoxypropyltrimethoxy silane, 3,4-epoxypropylmethyldimethoxy silane, 3,4-epoxypropyltriethoxy silane, 3,4-epoxypropylmethyldiethoxy silane, 2-(3,4-epoxycyclohexyl)ethyltrimethoxy silane 2-(3,4-epoxycyclohexyl)ethylmethyldimethoxy silane, 2-(3,4-epoxycyclohexyl)ethyltriethoxy silane, 2-(3,4-epoxycyclohexyl)ethylmethyldiethoxy silane, 2-isocyanate ethyltrimethoxy silane, 2-isocyanate ethylmethyldimethoxy silane, 2-isocyanate ethyltriethoxy silane, 2-isocyanate ethylmethyldiethoxy silane, 3-isocyanate propyltrimethoxy silane, 3-isocyanate propylmethyldimethoxy silane, 3-isocyanate propyltriethoxy silane, 3-isocyanate propylmethyldiethoxy silane, 4-isocyanate butyltrimethoxy silane, 4-isocyanate butylmethyldimethoxy silane, 4-isocyanate butyltriethoxy silane, 4-isocyanate butylmethyldiethoxy silane, 5-isocyanate pentyltrimethoxy silane, 5-isocyanate pentylmethyldimethoxy silane, 5-isocyanate pentyltriethoxy silane, 5-isocyanate pentylmethyldiethoxy silane, 6-isocyanate hexyltrimethoxy silane, 6-isocyanate hexylmethyldimethoxy silane, 6-isocyanate hexyltriethoxy silane, 6-isocyanate hexylmethyldiethoxy silane, 7-isocyanate heptyltrimethoxy silane, 7-isocyanate heptylmethyldimethoxy silane, 7-isocyanate heptyltriethoxy silane, 7-isocyanate heptylmethyldiethoxy silane, 8-isocyanate octyltrimethoxy silane, 8-isocyanate octylmethyldimethoxy silane, 8-isocyanate octyltriethoxy silane, 8-isocyanate octylmethyldiethoxy silane, 9-isocyanate nonyltrimethoxy silane, 9-isocyanate nonylmethyldimethoxy silane, 9-isocyanate nonyltriethoxy silane, 9-isocyanate nonylmethyldiethoxy silane, 10-isocyanate decyltrimethoxy silane, 10-isocyanate decylmethyldimethoxy silane, 10-isocyanate decyltriethoxy silane; 10-isocyanate decylmethyldiethoxy silane, 11-isocyanate undecyltrimethoxy silane, 11-isocyanate undecylmethyldimethoxy silane, 11-isocyanate undecyltriethoxy silane, 11-isocyanate undecylmethyldiethoxy silane, 12-isocyanate dodecyltrimethoxy silane, 12-isocyanate dodecylmethyldimethoxy silane, 12-isocyanate dodecyltriethoxy silane, 12-isocyanate dodecylmethyldiethoxy silane, m-aminophenyltrimethoxy silane, m-aminophenylmethyldimethoxy silane, m-aminophenyltriethoxy silane, m-aminophenylmethyldiethoxy silane, o-aminophenyltrimethoxy silane, o-animophenylmethyldimethoxy silane, o-aminophenyltriethoxy silane, o-aminophenylmethyldiethoxy silane, p-aminophenyltrimethoxy silane, p-aminophenylmethyldimethoxy silane, p-aminophenyltriethoxy silane, p-aminophenylmethyldiethoxy silane, 2-thioisocyanate ethyltrimethoxy silane, 2-thioisocyanate ethylmethyldimethoxy silane, 2-thioisocyanate ethyltriethoxy silane, 2-thioisocyanate ethylmethyldiethoxy silane, 3-thioisocyanate propyltrimethoxy silane, 3-thioisocyanate propylmethyldimethoxy silane, 3-thioisocyanate propyltriethoxy silane, 3-thioisocyanate propylmethyldiethoxy silane, 4-thioisocyanate butyltrimethoxy silane, 4-thioisocyanate butylmethyldimethoxy silane, 4-thioisocyanate butyltriethoxy silane, 4-thioisocyanate butylmethyldiethoxy silane, 5-thioisocyanate pentyltrimethoxy silane, 5-thioisocyanate pentylmethyldimethoxy silane, 5-thioisocyanate pentyltriethoxy silane, 5-thioisocyanate pentylmethyldiethoxy silane, 6-thioisocyanate hexyltrimethoxy silane, 6-thioisocyanate hexylmethyldimethoxy silane, 6-thioisocyanate hexyltriethoxy silane, 6-thioisocyanate hexylmethyldiethoxy silane, 7-thioisocyanate heptyltrimethoxy silane, 7-thioisocyanate heptylmethyldimethoxy silane, 7-thioisocyanate heptyltriethoxy silane, 7-thioisocyanate heptylmethyldiethoxy silane, 8-thioisocyanate octyltrimethoxy silane, 8-thioisocyanate octylmethyldimethoxy silane, 8-thioisocyanate octyltriethoxy silane, 8-thioisocyanate octylmethyldiethoxy silane, 9-thioisocyanate nonyltrimethoxy silane, 9-thioisocyanate nonylmethyldimethoxy silane, 9-thioisocyanate nonyltriethoxy silane, 9-thioisocyanate nonylmethyldiethoxy silane, 10-thioisocyanate decyltrimethoxy silane, 10-thioisocyanate decylmethyldimethoxy silane, 10-thioisocyanate decyltriethoxy silane, 10-thioisocyanate decylmethyldiethoxy silane, 11-thioisocyanate undecyltrimethoxy silane, 11-thioisocyanate undecylmethyldimethoxy silane, 11-thioisocyanate undecyltriethoxy silane, 11-isocyanate undecylmethyldiethoxy silane, 12-thioisocyanate dodecyltrimethoxy silane, 12-thioisocyanate dodecylmethyldimethoxy silane, 12-thioisocyanate dodecyltriethoxy silane, 12-thioisocyanate dodecylmethyldiethoxy silane, ureidoethyltrimethoxy silane, ureidoethylmethyldimethoxy silane, ureidoethyltriethoxy silane, ureidoethylmethyldiethoxy silane, ureidopropyltrimethoxy silane, ureidopropylmethyldimethoxy silane, ureidopropyltriethoxy silane, ureidopropylmethyldiethoxy silane, ureidobutyltrimethoxy silane, ureidobutylmethyldimethoxy silane, ureidobutyltriethoxy silane, ureidobutylmethyldiethoxy silane, ureidopentyltrimethoxy silane, ureidopentylmethyldimethoxy silane, ureidopentyltriethoxy silane, ureidopentylmethyldiethoxy silane, ureidohexyltrimethoxy silane, ureidohexylmethyldimethoxy silane, ureidohexyltriethoxy silane, ureidohexylmethyldiethoxy silane, ureidoheptyltrimethoxy silane, ureidoheptylmethyldimethoxy silane, ureidoheptyltriethoxy silane, ureidoheptylmethyldiethoxy silane, ureidooctyltrimethoxy silane, ureidooctylmethyldimethoxy silane, ureidooctyltriethoxy silane, ureidooctylmethyldiethoxy silane, ureidononyltrimethoxy silane, ureidononylmethyldimethoxy silane, ureidononyltriethoxy silane, ureidononylmethyldiethoxy silane, ureidodecyltrimethoxy silane, ureidodecylmethyldimethoxy silane, ureidodecyltriethoxy silane, ureidodecylmethyldiethoxy silane, ureidoundecyltrimethoxy silane, ureidoundecylmethyldimethoxy silane, ureidoundecyltriethoxy silane, ureidoundecylmethyldiethoxy silane, ureidododecyltrimethoxy silane, ureidododecylmethyldimethoxy silane, ureidododecyltriethoxy silane, ureidododecylmethyldiethoxy silane, 3-aminopropyltrimethoxy silane, 3-aminopropylmethyldimethoxy silane, 3-aminopropyltriethoxy silane, 3-aminopropylmethyldiethoxy silane, 3-amino-2-methylpropyltrimethoxy silane, 3-amino-2-methylpropylmethyldimethoxy silane, 3-amino-2-methylpropyltriethoxy silane, 3-amino-2-methylpropylmethyldiethoxy silane, 2-(2-pyridyl)ethyltrimethoxy silane, 2-(2-pyridyl)ethylmethyldimethoxy silane, 2-(2-pyridyl)ethyltriethoxy silane, 2-(2-pyridyl)ethylmethyldiethoxy silane, 2-(4-pyridyl)ethyltrimethoxy silane, 2-(4-pyridyl)ethylmethyldimethoxy silane, 2-(4-pyridyl)ethyltriethoxy silane, 2-(4-pyridyl)ethylmethyldiethoxy silane, 3-(2-pyridyl)propyltrimethoxy silane, 3-(2-pyridyl)propylmethyldimethoxy silane, 3-(2-pyridyl)propyltriethoxy silane, 3-(2-pyridyl)propylmethyldiethoxy silane, 3-(4-pyridyl)propyltrimethoxy silane, 3-(4-pyridyl)propylmethyldimethoxy silane, 3-(4-pyridyl)propyltriethoxy silane, 3-(4-pyridyl)propylmethyldiethoxy silane, 2,4-dioxopentyltrimethoxy silane, 2,4-dioxopentylmethyldimethoxy silane, 2,4-dioxopentyltriethoxy silane, 2,4-dioxopentylmethyldiethoxy silane, 2-(4-piperidyl)ethyltrimethoxy silane, 2-(4-piperidyl)ethylmethyldimethoxy silane, 2-(4-piperidyl)ethyltriethoxy silane, 2-(4-piperidyl)ethylmethyldiethoxy silane, 3-(4-piperydyl)propyltrimethoxy silane, 3-(4-piperidyl)propylmethyldimethoxy silane, 3-(4-piperidyl)propyltriethoxy silane, 3-(4-piperidyl)propylmethyldiethoxy silane, 2-(2-piperidyl)ethyltrimethoxy silane, 2-(2-piperidyl)ethylmethyldimethoxy silane, 2-(2-piperidyl)ethyltriethoxy silane, 2-(2-piperidyl)ethylmethyldiethoxy silane, 3-(2-piperidyl)propyltrimethoxy silane, 3-(2-piperidyl)propylmethyldimethoxy silane, 3-(2-piperidyl)propyltriethoxy silane, 3-(2-piperidyl)propylmethyldiethoxy silane, 2-(2-piperidyl)ethyltrimethoxy silane, 2-(2-piperidyl)ethylmethyldimethoxy silane, 2-(2-piperidyl)ethyltriethoxy silane, 2-(2-piperidyl)ethylmethyldiethoxy silane, 3-(2-piperydyl)propyltrimethoxy silane, 3-(2-piperidyl)propylmethyldimethoxy silane, 3-(2-piperidyl)propyltriethoxy silane, 3-(2-piperidyl)propylmethyldiethoxy silane, 2-(4-pyrrolidyl)ethyltrimethoxy silane, 2-(4-pyrrolidyl)ethylmethyldimethoxy silane, 2-(4-pyrrolidyl)ethyltriethoxy silane, 2-(4-pyrrolidyl)ethylmethyldiethoxy silane, 3-(4-pyrrolidyl)propyltrimethoxy silane, 3-(4-pyrrolidyl)propylmethyldimethoxy silane, 3-(4-pyrrolidyl)propyltriethoxy silane, 3-(4-pyrrolidyl)propylmethyldiethoxy silane, 2-(2-pyrrolidyl)ethyltrimethoxy silane, 2-(2-pyrrolidyl)ethylmethyldimethoxy silane,2-(2-pyrrolidyl)ethyltriethoxy silane, 2-(2-pyrrolidyl)ethylmethyldiethoxy silane, 3-(2-pyrrolidyl)propyltrimethoxy silane, 3-(2-pyrrolidyl)propylmethyldimethoxy silane, 3-(2-pyrrolidyl)propyltriethoxy silane, 3-(3-pyrrolidyl)propylmethyldiethoxy silane, 2-(2-pyrrolidyl)ethyltrimethoxy silane, 2-(2-pyrrolidyl)ethylmethyldimethoxy silane, 2-(2-pyrrolidyl)ethyltriethoxy silane, 2-(2-pyrrolidyl)ethylmethyldiethoxy silane, 3-(2-pyrrolidyl)propyltrimethoxy silane, 3-(2-pyrrolidyl)propylmethyldimethoxy silane, 3-(2-pyrrolidyl)propyltriethoxy silane, 3-(2-pyrrolidyl)propylmethyldiethoxy silane, 2-cyanoethyltrimethoxy silane, 2-cyanoethylmethyldimethoxy silane, 2-cyanoethyltriethoxy silane, 2-cyanoethylmethyldiethoxy silane, 3-cyanopropyltrimethoxy silane, 3-cyanopropylmethyldimethoxy silane, 3-cyanopropyltriethoxy silane, 3-cyanopropylmethyldiethoxy silane, 3-methylsulfonyltrimethoxy silane, 3-methylsulfonylmethyldimethoxy silane, 3-methylsulfonyltriethoxy silane, 3-methylsulfonylmethyldiethoxy silane, 3-ethylsulfonyltrimethoxy silane, 3-ethylsulfonylmethyldimethoxy silane, 3-ethylsulfonyltriethoxy silane, 3-ethylsulfonylmethyldiethoxy silane, 3-methylsulfinyltrimethoxy silane, 3-methylsulfinylmethyldimethoxy silane, 3-methylsulfinyltriethoxy silane, 3-methylsulfinylmethyldiethoxy silane, 3-ethylsulfinyltrimethoxy silane, 3-ethylsulfinylmethyldimethoxy silane, 3-ethylsulfinyltriethoxy silane, 3-ethylsulfinylmethyldiethoxy silane, 3-(2-imidazolyl)propyltrimethoxy silane, 3-(2-imidazolyl)propylmethyldimethoxy silane, 3-(2-imidazolyl)propyltriethoxy silane, 3-(2-imidazolyl)propylmethyldiethoxy silane, 3-(4-imidazolyl)propyltrimethoxy silane, 3-(4-imidaxolyl)propylmethyldimethoxy silane, 3-(4-imidazolyl)propyltriethoxy silane, 3-(4-imidazolyl)propylmethyldiethoxy silane, 3-(5-imidazolyl)propyltrimethoxy silane, 3-(5-imidazolyl)propylmethyldimethoxy silane, 3-(5-imidazolyl)propyltriethoxy silane, 3-(5-imidazolyl)propylmethyldiethoxy silane, and partial condensates thereof.

As the solvent dissolving the silane coupling agent can be used a solvent suitable for the pretreatment of the brass such as water, methyl alcohol, ethyl alcohol, 2-propanol, ethylene glycol, polyethylene glycol or the like. These solvent may be used alone or in a combination of two or more. Moreover, when the silane coupling agent is dissolved in the solvent and applied onto the brass surface, pH of the solvent exerts on the adhesion stability of the silane coupling agent, so that the pH of the solvent is typically preferable to be a range of 2-7.

The concentration of the metal and the silane coupling agent in the metal-containing silane coupling agent solution is not particularly limited, but is preferably within a range of 0.01-10% by mass, more preferably 0.03-5% by mass. When the concentration of the metal and the silane coupling agent in the solution is less than 0.01% by mass, the amount of the metal having an adhesion promoting action between the rubber composition and the brass adhered to the brass surface is too small and the sufficient adhesion is not obtained, while when it exceeds 10% by mass, the adhered amount is too large and the drying takes a long time or the excessive adhesion reaction is caused to produce a brittle adhesion layer, and hence there is caused a fear of deteriorating the adhesion durability.

As the method for surface-treating the adherent made from the brass or plated with the brass are common the immersion, blowing, brushing, spin coating and the like. However, it is not limited thereto and there may be used any method wherein the metal having the rubber composition-brass adhesion promoting action and the silane coupling agent having an alkoxysilyl group are adhered to the brass surface.

Also, the environment in the surface treatment may be warmed, if necessary. In order to vaporize the solvent used in the surface treatment, it is enough to sufficiently dry the surface by heating above a vaporization temperature of the solvent used, but the further heating is conducted, if necessary. After the drying, the washing with a suitable solvent may be carried out, if necessary, for removing the silane coupling agent physically adsorbed. Even in the drying after the washing, the surface may be dried by heating above the vaporization temperature of the solvent used for the washing likewise the drying after the surface treatment.

In the vulcanization adhesion method according to the invention, the rubber composition adhered to the adherent is formed by compounding sulfur in the rubber component. In this case, the amount of sulfur compounded is preferably within a range of 1-8 parts by mass based on 100 parts by mass of the rubber component. When the amount of sulfur is less than 1 part by mass, sulfur required in the vulcanization adhesion reaction is not sufficiently supplied from the rubber composition and it is difficult to ensure the adhesive force inherent to the vulcanization adhesion according to the invention, while when it exceeds 8 parts by mass, the deterioration of the resistance to thermal aging in rubber is undesirably caused. Moreover, when the amount of sulfur compounded is 3-6 parts by mass based on 100 parts by mass of the rubber component, the adhesion is obtained more effectively.

The rubber component in the rubber composition is natural rubber and/or synthetic rubber. The synthetic rubber is not particularly limited but includes polyisoprene rubber (IR), polybutadiene rubber (BR), styrene-butadiene copolymer rubber (SBR) and the like. These rubber components may be used alone or in a blend of two or more.

Further, the rubber composition may be properly compounded with additives usually used in the rubber industry in addition to the above rubber component and sulfur. Concretely, it is preferable to compound 2-10 parts by mass of zinc oxide, 0.3-2 parts by mass of a vulcanization accelerator and 30-70 parts by mass of carbon black based on 100 parts by mass of the rubber component. When the amount of zinc oxide is less than 2 parts by mass based on 100 parts by mass of the rubber component, the sufficient elastic modulus of rubber is not obtained, while when it exceeds 10 parts by mass, the adhesion property is deteriorated. When the amount of the vulcanization accelerator is less than 0.3 part by mass, the sufficient elastic modulus of rubber is not obtained, while when it exceeds 2 parts by mass, the adhesion property is deteriorated. When the amount of carbon black is less than 30 parts by mass, the sufficient elastic modulus of rubber is not obtained, while when it exceeds 70 parts by mass, the fracture properties tend to be deteriorated. Moreover, the rubber composition may be produced by milling the rubber component and sulfur and further various additives properly selected, if necessary and warming and extruding and the like.

When the rubber composition is compounded with an adhesion promoter such as an organic Co compound or the like, the anti-aging property of rubber is deteriorated, so that it is preferable to add no adhesion promoter. In the invention, the metal having the action similar to that of the adhesion promoter is previously adhered to the vicinity of adhesion interface between the rubber composition and the brass through the silane coupling agent, so that it is possible to eliminate the adhesion promoter from the rubber composition. In the invention, therefore, the compounding of the adhesion promoter is not necessary, but a proper amount of the adhesion promoter may be compounded from a viewpoint that the rubber properties are ensured. In the latter case, the content of metallic Co in the rubber composition is preferable to be not more than 0.1 part by mass based on 100 parts by mass of the rubber component. As the adhesion promoter are mentioned a Co salt of an organic acid such as cobalt naphthenate, cobalt stearate, cobalt neodecanoate, cobalt rosinate, cobalt versatate, cobalt tallate or the like; a composite salt in which a part of the organic acid in the organic acid Co salt is replaced with boric acid or the like; and so on.

In the adherent adhered to the rubber composition and made from the brass or plated with the brass, the composition ratio of copper/zinc in the brass is preferable to be within a range of 58%/42%-72%/28%. When the composition of copper in the brass is less than 58%, the amount of copper required in the vulcanization adhesion reaction is not supplied sufficiently and it is difficult to ensure the adhesive force inherent to the vulcanization adhesion according to the invention, while when the composition of copper exceeds 72%, a greater amount of copper is inversely supplied to cause the excessive adhesion reaction and the resistance to thermal adhesion is undesirably deteriorated.

The form of the adherent is not particularly limited and includes a plate, a cord, a filament and the like. When the adherent is a cord, there can be obtained a cord-rubber composite suitable as a reinforcing member for a belt and a carcass of a tire and others by coating a plurality of such cords with the rubber composition. Also, the interior material of the adherent plated with the brass is not particularly limited and includes, for example, iron, copper, aluminum, SUS and the like.

In the vulcanization adhesion method according to the invention, the rubber composition and the adherent made from the brass or plated with the brass are adhered to each other by laminating the rubber composition to the adherent and heating under a pressure. The pressure in the pressurizing and temperature in the heating are not particularly limited, and are the same as the conventional ones adopted in the vulcanization adhesion between the rubber composition and the adherent made from the brass or plated with the brass.

### <Reinforcing member for rubber article>

The reinforcing member for rubber article according to the invention will be described in detail below. The reinforcing member for rubber article according to the invention is formed by subjecting a steel filament plated with brass or a steel cord obtained twisting a plurality of such steel filaments to a surface treatment with the metal-containing silane coupling agent solution.

In the reinforcing member for rubber article according to the invention, the steel filament or steel cord is surface-treated with the metal-containing silane coupling agent solution, whereby the metal having a catalytic action to the adhesion reaction between the coating rubber and the brass plating can be stably placed on the surface of the steel filament or steel cord. Therefore, in the reinforcing member for rubber article according to the invention, a smaller amount of the metal having the adhesion promoting action can be used to efficiently adhere the coating rubber to the steel filament or steel cord. Also, since the initial adhesion property between the coating rubber and the steel filament or steel cord is high, the adhesion promoter including Co or the like can be eliminated or decreased from the rubber composition as a coating rubber to improve the resistance to thermal adhesion between the coating rubber and the steel filament or steel cord, and further the reversion is prevented to improve the anti-aging property of the coating rubber or the chemical blooming can be prevented to prevent the lowering of the adhesiveness and adhesion property between the uncured rubbers. Furthermore, the efficiency of the adhesion reaction in the reinforcing member for rubber article according to the invention is high owing to the presence of the adhesion promoter at the adhesion reaction interface, it is not necessary to add the adhesion promoter to the rubber composition as a coating rubber, and also the sufficient adhesion is obtained even when the amount of sulfur compounded in the rubber composition as a coating rubber is decreased. Therefore, the steel filament plated with the brass or the steel cord can be adhered even in the rubber composition having such a compounding that the adhesion to the brass has hitherto been made impossible, and hence the freedom degree of the compounding in the rubber composition as a coating rubber capable of adhering to the brass can be largely increased.

In the reinforcing member for rubber article according to the invention, the metal included in the metal-containing silane coupling agent solution, the silane coupling agent used as a starting material of the metal-containing silane coupling agent solution, the solvent dissolving the silane coupling agent, the concentration of the metal and silane coupling agent in the metal-containing silane coupling agent solution and the environment of the surface treatment are the same as described in the section of <Vulcanization adhesion method between rubber composition and adherent made from brass or plated with brass>. The reinforcing member for rubber article according to the invention can be produced by subjecting the steel filament plated with the brass or the steel cord obtained by twisting a plurality of such steel filaments as an adherent plated with the brass to the surface treatment with the metal-containing silane coupling agent solution

In the reinforcing member for rubber article according to the invention, the composition ratio of copper/zinc in the brass plated layer of the steel filament is preferable to be within a range of 58%/42%-72%/28%. When the composition of copper in the brass plated layer is less than 58%, the drawability is deteriorated and the productivity is obstructed due to the wire breaking and the mass production becomes difficult, while when the composition of copper exceeds 72%, the resistance to moist heat adhesion and resistance to humidity adhesion are deteriorated and hence the sufficient durability to an exposure environment of rubber-reinforcing member composite can not be maintained.

Also, the brass plated layer of the steel filament is preferable to have an average thickness of 0.13-0.35 µm. When the average thickness of the plated layer is less than 0.13 µm, a portion exposing iron matrix is increased to obstruct the initial adhesion property, while when it exceeds 0.35 µm, the adhesion reaction excessively proceeds due to heat in the use of the rubber article using the rubber-reinforcing member composite and brittle adhesion is merely obtained.

In the reinforcing member for rubber article according to the invention, it is preferable to control an amount of phosphorus included as an oxide in a surface layer region from the brass plated surface of the steel filament to a depth of 5 nm inward in the radial direction of the filament to not more than 1.5 atomic%. In general, the steel filament is produced by drawing a wire having a diameter of, for example, about 5 mm, so that a lubricant is naturally used in this production process, and particularly, a final drawing step is carried out by using a die of about 20 pass disposed in a liquid lubricant. At the final drawing step, an extreme pressure is generated between the steel filament and the die and the temperature becomes very high, so that it is common to use a lubricant based on phosphoric acid for ensuring the lubricity at an extreme pressure and higher temperature state. This lubricant is reacted with the filament surface in the drawing to form a lubricating film layer or a layer of phosphoric acid compound, whereby input under the extreme pressure and higher temperature condition is mitigated to realize the mass production of the filament. Therefore, the entrapment of phosphoric acid into the plated layer of the filament can not be avoided in the production process. Particularly, as seen from the description of WO2002/06673, phosphorus included as an oxide in a surface layer region from the brass plated surface of the steel filament to a depth of 5 nm inward in the radial direction of the filament obstructs the reaction between the coating rubber and the brass and delays the adhesion reaction between the coating rubber and the brass. When the amount of phosphorus in the surface layer region is controlled to not more than 1.5 atomic%, the initial adhesion rate can be further improved to improve the adhesion quality.

Moreover, the amount of phosphorus included as an oxide in the surface layer region can be controlled to not more than 1.5 atomic% by conducting adjustments of pass schedule of the drawing, form and angle of entrance or approach of the die, material of the die, composition of the lubricant and the like alone or in a proper combination. Particularly, it is very effective that the drawing is carried out by using a lubricant containing an extreme pressure additive likewise the usual case and using a die made from a material having an excellent self-lubricity and an excellent cutting property such as a sintered diamond die in a final pass or a several pass inclusive of the final pass among about 20 pass at the final drawing step.

Further, the steel filament is preferable to have a diameter of not more than 0.40 mm. When the diameter of the steel filament exceeds 0.40 mm, if the rubber article used is repeatedly subjected to strain under bending deformation, surface strain becomes large and the buckling or fatigue breakage is easily caused.

Moreover, a steel cord suitable for rubber articles using a rubber-reinforcing member composite, particularly as a reinforcing member for a carcass or a belt of a tire can be formed by twisting a plurality of the above steel filaments. Also, the size of the steel cord, twisting number, twisting conditions and the like are properly selected in accordance with the performances required in the rubber article used.

### <Rubber-reinforcing member composite>

The rubber-reinforcing member composite according to the invention is formed by coating the above reinforcing member for rubber article with the rubber composition compounded with 1-8 parts by mass of sulfur based on 100 parts by mass of the rubber component comprised of natural rubber and/or synthetic rubbers.

In the rubber-reinforcing member composite according to the invention, it is preferable that not less than 50% by mass of the rubber component in the rubber composition used as the coating rubber is natural rubber. When the ratio of natural rubber in the rubber component is less than 50% by mass, the adhesion properties and fracture properties tend to be deteriorated.

Also, as the synthetic rubber in the rubber component of the rubber composition for the coating rubber are preferable styrene-butadiene rubber (SBR), butadiene rubber (BR), butyl rubber (IIR), halogenated butyl rubber such as a brominated butyl rubber, butyl rubber having a paramethylstyrene group (concretely a copolymer of isobutylene and p-halogenated methylstyrene or the like), ethylene-propylene-diene rubber (EPDM) and isoprene rubber (IR) from a viewpoint of the resistance to thermal aging. The SBR is preferable to be a solution polymerized SBR having a vinyl bond content in butadiene portion of 35-85% by mass and a bound styrene content of not more than 30% by mass. By using SBR having a vinyl bond content in butadiene portion of 35-85% by mass can be improved the balance between the resistance to thermal aging and the fracture property in the rubber composition, while the adhesion property to the reinforcing member can be improved by using SBR having a bound styrene content of not more than 30% by mass. Further, the BR is preferable to have a vinyl bond content of 1-85% by mass. By using the BR having a vinyl bond content of 1-85% by mass can be improved the resistance to thermal aging and fracture properties of the rubber composition.

The rubber composition contains 1-8 parts by mass of sulfur based on 100 parts by mass of the rubber component. When the amount of sulfur in the rubber composition is less than 1 part by mass, it is difficult to ensure the adhesive force inherent to the vulcanization adhesion between sulfur and rubber, while when it exceeds 8 parts by mass, the resistance to thermal aging and fracture properties as rubber properties are undesirably deteriorated.

Furthermore, the rubber composition may be properly compounded with additives usually used in the rubber industry in addition to the rubber component and sulfur. Concretely, it is preferable to be compounded with 2-10 parts by mass of zinc oxide, 0.3-2 parts by mass of a vulcanization accelerator, 30-70 parts by mass of carbon black and, if necessary, 0-0.3 part by mass of an adhesion promoter as a metal amount based on 100 parts by mass of the rubber component. When the amount of zinc oxide is less than 2 parts by mass based on 100 parts by mass of the rubber component, the sufficient elastic modulus of rubber is not obtained, while when it exceeds 10 parts by mass, the adhesion property lowers. When the amount of the vulcanization accelerator is less than 0.3 part by mass, the sufficient elastic modulus of rubber is not obtained, while when it exceeds 2 parts by mass, the adhesion property lowers. When the amount of carbon black is less than 30 parts by mass, the sufficient elastic modulus of rubber is not obtained, while when it exceeds 70 parts by mass, the fracture properties tend to be deteriorated. Further, the adhesion promoter may be added, if necessary, but when the amount of metal in the adhesion promoter exceeds 0.30 part by mass, the resistance to thermal aging tends to be undesirably deteriorated. Moreover, the rubber composition can be produced by milling the rubber component and sulfur and, if necessary, various additives properly selected and warming, extrusion and the like.

### <Pneumatictire>

Next, the pneumatic tire according to the invention will be described in detail with reference to the accompanying drawing. FIG. 1 is a section view of an embodiment of the pneumatic tire according to the invention, wherein numeral 1 is a tread portion, numeral 2 a pair of sidewall portions extending inward from both sides of the tread portion 1 in the radial direction, and numeral 3 a bead portion connecting to a radially inner end of the sidewall portion 2.

A carcass 4 forming a skeleton structure of the tire and reinforcing the portions 1, 2, 3 is comprised of one or more carcass plies, each of which comprises a main body portion toroidally extending between bead cores 5 embedded in the respective bead portions 3 and a turnup portion wound around each bead core 5 from an inside toward an outside in a widthwise direction of the tire and outward in the radial direction. Moreover, the illustrated carcass 4 is comprised of one carcass ply, but plural carcass plies may be used in the tire according to the invention. Also, numeral 6 is a belt, in which the belt 6 is comprised of one or more belt layers arranged outside a crown portion of the carcass 4 inn the radial direction of the tire. The illustrated belt 6 is comprised of two belt layers, but the number of the belt layers is not limited thereto in the tire according to the invention.

Further, the illustrated tire comprises a cap 7 disposed at the outside of the belt 6 in the radial direction so as to cover the whole of the belt 6, a pair of layers 8 disposed at the outside of the belt 6 in the radial direction so as to cover both end portions of the belt 6, a pair of chafers 9 disposed along an outer surface of the carcass 4 in the bead portion 3, and a pair of inserts 10 disposed at the outside of the carcass 4 in the sidewall portion 2 in the widthwise direction of the tire. However, the tire according to the invention is not necessary to have the cap, layer, chafer and insert. Also, each of the cap 7, layer 8, chafer 9 and insert 10 in the illustrated embodiment is one, but the number of the cap 7, layer 8, chafer 9 and insert 10 is not limited thereto in the tire according to the invention.

In the pneumatic tire, at least one of the carcass 4, belt 6, cap 7, layer 8, chafer 9 and insert 10 comprises the above rubber-reinforcing member composite. That is, at least one carcass ply in the carcass 4 and/or at least one belt layer in the belt 6, or at least one of the cap 7, layer 8, chafer 9 and insert 10 may comprise the rubber-reinforcing member composite, or one or more carcass plies and one or more belt layers may be comprised of the rubber-reinforcing member composite, or one or more of the cap 7, layer 8, chafer 9 and insert 10 may be comprised of the rubber-reinforcing member composite.

The pneumatic tire according to the invention is not particularly limited as long as the rubber-reinforcing member composite is applied to at least one of the carcass plies and the belt layers or the rubber-reinforcing member composite is disposed as at least one of the cap, layer, chafer and insert, and can be manufactured according to the usual manner. Also, as a gas to be filled in the pneumatic tire according to the invention may be used usual air or air having an adjusted oxygen partial pressure, and an inert gas such as nitrogen, argon, helium or the like.

### <Examples>

The following examples are given in illustration of the invention and are not intended as limitations thereof.

### [Test for vulcanization adhesion between rubber composition and adherent made from brass]

### (Solution A: preparation of silane coupling agent solution)

Into a polyethylene vessel of 5 L is charged 2 kg of a mixed solution of purified ethanol and water at a weight ratio of 95:5, and 40 g of 3-(2-aminoethyl)aminopropyltrimethoxy silane as a silane coupling agent is added, which are stirred by an agitator provided with a Teflon (registered trade mark) rotor at room temperature for 15 minutes to obtain a solution A. The solution A is a colorless and transparent. Thereafter, the solution A is used for the purpose of immersing an adherent as mentioned later. Moreover, the solution A is used in an experiment within 1 hour after the preparation.

### (Solution B: preparation of Co-containing silane coupling agent solution according to the invention)

The same procedure as in the solution A is carried out except that 108 g of cobalt stearate (1.0 molar equivalent to silane coupling agent) is added to the solution together with the silane coupling agent to obtain a solution B. The solution B is deep bluish.

On the other hand, a brass plate having a thickness of 1.5 mm and a mass ratio of copper/zinc of 65/35 is used as an adherent.

The brass plate is immersed in the silane coupling agent solution for 1 minute and taken out therefrom and dried in an oven of 80°C for 5 minutes. After the drying, a state of adhering the silane coupling agent to a back surface of the brass plate is analyzed by means of a scanning type electron microscope provided with an X-ray analytical apparatus (SEM-EDX). As a result, the surface of the brass plate immersed in the solution B is substantially uniformly covered with Co.

Then, a rubber composition having a compounding recipe shown in Table 1 is prepared according to usual manner, and a sample for adhesion test comprised of the rubber composition and the brass plate is prepared by shaping based on a test method for 90° peeling between metal piece and rubber according to JIS K6256 and vulcanizing at 160°C with a vulcanization press for a given time. The resulting sample for adhesion test is applied to an adhesion test based on the test method for 90° peeling between metal piece and rubber according to JIS K6256 to measure and evaluate rubber covering ratio and adhesive force to the surface of the brass plate after the peeing test. The results are shown in Table 1.

In Table 1, the initial adhesion property is evaluated by allocating a vulcanization time of each sample over 60 minutes at maximum and measuring a time until the rubber covering ratio of the brass plate after the peeling test arrives at 100%. Moreover, when the rubber covering ratio does not arrive at 100% even after the vulcanization for 60 minutes, the rubber covering ratio of the sample is evaluated at the vulcanization of 60 minutes.

The resistance to thermal adhesion is evaluated by leaving the sample having a rubber covering ratio of 100% used in the evaluation of the initial adhesion property in a gear oven of 100°C for 20 days and subjecting to the peeling test likewise the evaluation of the initial adhesion property to measure a rubber covering ratio on the brass plate after the peeling test. At the same time, the adhesive force between the rubber composition and the brass plate in the peeling test is measured and represented by an index on the basis that the adhesive force of the sample in Comparative Example 1 is 100. The larger the index value, the higher the adhesive force. Moreover, among the samples not arriving at the rubber covering ratio of 100% even in the vulcanization for 60 minutes, samples having a rubber covering ratio of not more than 80% in the vulcanization for 60 minutes are removed from the measurement of the resistance to thermal adhesion because the adhesion between the brass plate and the rubber composition is not sufficient.

**Table 1**

| | | Comparative Example 1 | Comparative Example 2 | Comparative Example 3 | Comparative Examples 4 | Example 1 | Example 2 | Comparative Example 5 | Example 3 |
|---|---|---|---|---|---|---|---|---|---|
| Adherent | | brass plate | brass plate | brass plate | brass plate | brass plate | brass plate | brass plate | brass plate |
| Silane coupling agent solution | | none | none | solution A | solution A | solution B | solution B | none | solution B |
| Recipe of rubber composition (parts by mass) | natural rubber | 100 | 100 | 100 | 100 | 100 | 100 | 100 | 100 |
| | carbon black (HAF) | 50 | 50 | 50 | 50 | 50 | 50 | 50 | 50 |
| | zinc oxide | 5 | 5 | 5 | 5 | 5 | 5 | 5 | 5 |
| | antioxidant * 1 | 1 | 1 | 1 | 1 | 1 | 1 | 1 | 1 |
| | vulcanization accelerator *2 | 1 | 1 | 1 | 1 | 1 | 1 | 0.2 | 0.2 |
| | sulfur | 5 | 5 | 5 | 5 | 5 | 5 | 1 | 1 |
| | cobalt naphthenate *3 | 2 | 0 | 2 | 0 | 0 | 2 | 2 | 0 |
| Initial adhesion property (rubber covering ratio, %) | vulcanization of 160°C x 5 min | 0 | 0 | 0 | 0 | 10 | 10 | 0 | 0 |
| | vulcanization of 160° x 8 min | 10 | 0 | 0 | 0 | 30 | 30 | 0 | 10 |
| | vulcanization of 160°C x 11 min | 30 | 0 | 20 | 0 | 90 | 90 | 0 | 40 |
| | vulcanization of 160°C x 15 min | 80 | 0 | 60 | 0 | 100 | 100 | 0 | 80 |
| | vulcanization of 160°C x 20 min | 100 | 10 | 95 | 5 | 100 | 100 | 5 | 100 |
| | vulcanization of 160°C x 30 min | 100 | 40 | 100 | 20 | 100 | 100 | 10 | 100 |
| | vulcanization of 160° x 40 min | 100 | 100 | 100 | 90 | 100 | 100 | 10 | 100 |
| | vulcanization of 160°C x 60 min | 100 | 100 | 100 | 100 | 100 | 100 | 20 | 100 |
| Resistance to thermal adhesion (100°C x 20 days) | vulcanization time (min) | 20 | 40 | 30 | 60 | 15 | 15 | - | 20 |
| | rubber covering ratio (%) | 20 | 60 | 20 | 65 | 80 | 30 | - | 100 |
| | adhesive force (index) | 100 | 120 | 95 | 125 | 150 | 110 | - | 80 |

| | | | | | | | | | |
|---|---|---|---|---|---|---|---|---|---|
| * 1 N-phenyl-N'-(1,3,dimethylbutyl)-p-phenylenediamine, NOCRAC 6C made by OUCHISHINKO CHEMICAL INDUSTRIAL CO., LTD. * 2 N,N'-dicyclohexyl-2-benzothiazyl sulfenamide, NOCCELER DZ made by OUCHISHINKO CHEMICAL INDUSTRIAL CO., LTD. * 3 Metallic Co content = 10% | | | | | | | | | |

Comparative Example 1 is an adhesion method between rubber composition and brass based on the conventional knowledge that a rubber composition containing cobalt naphthenate as an adhesion promoter is adhered to a brass plate. Comparative Example 2 is an example wherein a rubber composition removing cobalt naphthenate from the recipe of Comparative Example 1 is adhered to a brass plate, and shows that the initial adhesion rate is slower than that of Comparative Example 1. Comparative Examples 3 and 4 are examples wherein the rubber compositions of Comparative Examples 1 and 2 are adhered to a brass plate coated with a silane coupling agent solution not containing a metal, respectively, and show the same adhesion behavior as in Comparative Examples 1 and 2 except that the initial adhesion rate becomes somewhat delayed as compared with those of Comparative Examples 1 and 2. The delay of the initial adhesion rate is considered due to the fact that the development of the adhesion reaction is delayed by the application of the silane coupling agent. Also, the delay of the initial adhesion rate suggests that the adhesion reaction between the brass and the rubber composition through the silane coupling agent does not occur.

On the contrary to Comparative Examples 1-4, Example 1 according to the invention is an adhesion between a rubber composition not containing cobalt naphthenate as an adhesion promoter likewise Comparative Examples 2 and 4 and a brass plate coated with a Co-containing silane coupling agent, and improves the rubber covering ratio and adhesive force in the resistance to thermal adhesion because Co is removed from the rubber composition while the initial adhesion rate is higher than the adhesion between the rubber composition and the brass plate based on the conventional knowledge in Comparative Example 1. Also, Example 2 is an adhesion between a rubber composition containing cobalt naphthenate as an adhesion promoter likewise Comparative Example 1 and a brass plate coated with a Co-containing silane coupling agent, but improves the initial adhesion rate as compared with Comparative Example 1 likewise Example
1. However, since the rubber composition contains cobalt naphthenate as an adhesion promoter, the resistance to thermal adhesion is deteriorated likewise Comparative Example 1. As seen from these results, it is more preferable that the rubber composition used does not contain Co in the vulcanization adhesion method according to the invention.

Further, Comparative Example 5 and Example 3 are an example that the rubber composition, in which an amount of sulfur compounded in the recipe of Comparative Example 1 and Example 1 is decreased from 5 parts by mass to 1 part by mass and hence an amount of a vulcanization accelerator compounded is decreased, is adhered to a brass plate or a brass plate coated with a Co-containing silane coupling agent. In Comparative Example 5, the initial adhesion is not substantially obtained even in the vulcanization at 145°C for 60 minutes, while the rubber covering ratio for substantially the same vulcanization time as in Comparative Example 1 is 100% in Example 3 though the initial adhesion rate tends to be somewhat delayed as compared with Example 1, and also since the amount of sulfur compounded is small, the rubber covering ratio in the evaluation of the resistance to thermal adhesion is higher than that of Example 1 and the resistance to thermal adhesion is further improved as compared with Example 1. Moreover, the feature that the adhesive force in the resistance to thermal adhesion lowers regardless of the higher rubber covering ratio is due to the fact that the fracture strength of rubber is lowered by largely decreasing the sulfur amount, but is not based on the lowering of the adhesion durability.

### [Evaluation in rubber-steel cord composite and tire]

There are prepared a solution A (silane coupling agent solution) and a solution B (Co-containing silane coupling agent solution according to the invention) was previously mentioned. Then, each of the above coupling agent is applied to a steel cord of 1 x 5 twisting structure, which is obtained by twisting steel filaments each having a filament diameter: 0.25 mm and a brass plated thickness: 0.25µm in a brass plating having a Cu/Zn composition ratio of Cu: 63 mass% and Zn: 37 mass%, by using a continuous treating apparatus designed so as to immerse the steel cord in the coupling solution for 1 minute and dry in a drying furnace of 80°C for 5 minutes. As the adhered state of the silane coupling agent onto the surface of the steel cord after the drying is analyzed by a scanning type electron microscope provided with an X-ray analysis device (SEM-EDX), the surface of the steel cord immersed in the solution B is approximately uniformly covered with Co.

Also, a rubber-steel cord composite sample is prepared by arranging steel cords in parallel to each other at an interval of 12.5 mm according to ASTM D-2229 and coating these steel cords from both sides thereof with a rubber composition having a compounding recipe shown in Table 2 or 3. The resulting rubber-steel cord composite is vulcanized at 160°C for a given time and the steel cord is pulled out from a rubber block by a method compliant to the standard to measure a pulling force (adhesive force) and a rubber covering ratio on the surface of the pulled steel cord. The results are shown in Tables 2 and 3.

In Tables 2 and 3, the initial adhesion property is evaluated by allocating a vulcanization time of each sample over 60 minutes at maximum and measuring a time until the rubber covering ratio of the steel cord arrives at 100%. Moreover, when the rubber covering ratio does not arrive at 100% even after the vulcanization for 60 minutes, the rubber covering ratio is evaluated at the vulcanization of 60 minutes. Also, the resistance to thermal adhesion is evaluated by leaving the sample having a rubber covering ratio of 100% used in the evaluation of the initial adhesion property in a gear oven of 100°C for 20 days and measuring a rubber covering ratio of the steel cord likewise the evaluation of the initial adhesion property,

Furthermore, a radial tire having a tire size of 185/70R14 is prepared by applying a rubber-steel cord composite made of steel cords subjected to the surface treatment in the same manner as mentioned above and the rubber composition having the compounding recipe shown in Table 3 to a belt layer. The resulting tire is left to stand in a gear oven of 100°C for 20 days, and thereafter the belt layer is taken out from the tire and the steel cords in the belt layer are peeled by a tensile testing machine according to a peeling test of JIS K-6256 to visually observe a rubber covering state of the exposed steel cord, and the covering ratio is represented by 0-100% as an indication of resistance to thermal adhesion. The results of the peeling test are shown in Table 3 together with results by a peeling test with respect to a belt layer of a tire before aging.

**Table 2**

| | | | | Comparative Example 6 | Comparative Example 7 | Comparative Example 8 | Comparative Example 9 | Example 4 | Example 5 |
|---|---|---|---|---|---|---|---|---|---|
| Steel cord | filament diameter | | mm | 0.25 | 0.25 | 0.25 | 0.25 | 0.25 | 0.25 |
| | Cu/Zn composition ratio | | - | 63/37 | 63/37 | 63/37 | 63/37 | 63/37 | 63/37 |
| | plated thickness | | µm | 0.20 | 0.20 | 0.20 | 0.20 | 0.20 | 0.20 |
| | twisting structure | | - | 1x5 | 1x5 | 1x5 | 1x5 | 1x5 | 1x5 |
| | phosphorus content in surface layer region of filament *4 | | atomic% | 1.7 | 1.7 | 1.7 | 1.7 | 1.7 | 1.7 |
| Application and kind of silane coupling agent solution | | | - | none | none | solution A | solution A | solution B | solution B |
| Recipe of rubber composition | natural rubber | | parts by mass | 100 | 100 | 100 | 100 | 100 | 100 |
| | carbon black (HAF) | | | 50 | 50 | 50 | 50 | 50 | 50 |
| | zinc oxide | | | 5 | 5 | 5 | 5 | 5 | 5 |
| | antioxidant *1 | | | 1 | 1 | 1 | 1 | 1 | 1 |
| | vulcanization accelerator *2 | | | 1 | 1 | 1 | 1 | 1 | 1 |
| | sulfur | | | 5 | 5 | 5 | 5 | 5 | 5 |
| | cobalt naphthenate *3 | | | 2 | 0 | 2 | 0 | 0 | 2 |
| Adhesion evaluation results of rubber-steel cord composite sample | Initial adhesion property (rubber covering ratio) | vulcanization of 160°C x 5 min | % | 0 | 0 | 0 | 0 | 10 | 10 |
| | | vulcanization of 160°C x 8 min | | 20 | 0 | 0 | 0 | 40 | 40 |
| | | vulcanization of 160°C x 11 min | | 40 | 0 | 30 | 0 | 90 | 95 |
| | | vulcanization of 160°C x 15 min | | 90 | 20 | 70 | 0 | 100 | 100 |
| | | vulcanization of 160°C x 20 min | | 100 | 20 | 95 | 10 | 100 | 100 |
| | | vulcanization of 160°C x 30 min | | 100 | 50 | 100 | 30 | 100 | 100 |
| | | vulcanization of 160°C x 40 min | | 100 | 100 | 100 | 80 | 100 | 100 |
| | | vulcanization of 160°C x 60 min | | 100 | 100 | 100 | 100 | 100 | 100 |
| | Resistance to thermal adhesion (100°C x 20 days) | vulcanization time | minutes | 20 | 40 | 30 | 60 | 15 | 15 |
| | | rubber covering ratio after aging | % | 15 | 60 | 20 | 60 | 70 | 40 |
| | | adhesive force *5 | index | 100 | 115 | 100 | 115 | 135 | 115 |

**Table 3**

| | | | | Comparative Example 10 | Comparative Example 11 | Comparative Example 12 | Comparative Example 13 | Example 6 | Example 7 |
|---|---|---|---|---|---|---|---|---|---|
| Steel cord | filament diameter | | mm | 0.25 | 0.25 | 0.25 | 0.25 | 0.25 | 0.25 |
| | Cu/Zn composition ratio | | - | 63/37 | 63/37 | 63/37 | 63/37 | 63/37 | 63/37 |
| | plated thickness | | µm | 0.20 | 0.20 | 0.20 | 0.20 | 0.20 | 0.20 |
| | twisting structure | | - | 1x5 | 1x5 | 1x5 | 1x5 | 1x5 | 1x5 |
| | phosphorus content in surface layer region of filament *4 | | atomic% | 1.7 | 1.7 | 1.7 | 1.7 | 1.7 | 1.7 |
| Application and kind of silane coupling agent solution | | | - | none | none | solution A | solution A | solution B | solution B |
| Recipe of rubber composition | natural rubber | | parts by mass | 100 | 100 | 100 | 100 | 100 | 100 |
| | carbon black (HAF) | | | 60 | 60 | 60 | 60 | 60 | 60 |
| | zinc oxide | | | 5 | 5 | 5 | 5 | 5 | 5 |
| | antioxidant *1 | | | 2 | 2 | 2 | 2 | 2 | 2 |
| | vulcanization accelerator *2 | | | 1 | 1 | 1 | 1 | 1 | 1 |
| | sulfur | | | 5 | 5 | 5 | 5 | 5 | 5 |
| | cobalt naphthenate *3 | | | 1 | 0 | 1 | 0 | 0 | 1 |
| Adhesion evaluation results of rubber-steel cord composite sample | Initial adhesion property (rubber covering ratio) | vulcanization of 160°C x 5 min | % | 0 | 0 | 0 | 0 | 5 | 10 |
| | | vulcanization of 160°C x 8 min | | 10 | 0 | 0 | 0 | 30 | 40 |
| | | vulcanisation of 160°C x 11 min | | 30 | 0 | 20 | 0 | 80 | 90 |
| | | vulcanization of 160°C x 15 min | | 90 | 5 | 70 | 0 | 100 | 100 |
| | | vulcanization of 160°C x 20 min | | 100 | 20 | 90 | 10 | 100 | 100 |
| | | vulcanization of 160°C x 30 min | | 100 | 60 | 100 | 40 | 100 | 100 |
| | | vulcanization of 160°C x 40 min | | 100 | 100 | 100 | 80 | 100 | 100 |
| | | vulcanization of 160°C x 60 min | | 100 | 100 | 100 | 100 | 100 | 100 |
| | Resistance to thermal adhesion (100°C x 20 days) | vulcanization time | minutes | 20 | 40 | 30 | 60 | 15 | 15 |
| | | rubber covering ratio after aging | % | 20 | 60 | 20 | 65 | 80 | 40 |
| | | adhesive force *5 | index | 100 | 115 | 95 | 120 | 140 | 110 |
| Adhesion evaluation results of tire *8 | Initial adhesion property | rubber covering ratio before aging | % | 100 | 30 | 100 | 20 | 100 | 100 |
| | Resistance to thermal adhesion (100°C x 20 days) | rubber covering ratio after aging | % | 30 | 40 | 20 | 30 | 80 | 50 |

| | | | | | | | | | |
|---|---|---|---|---|---|---|---|---|---|
| * 1, *2 and *3 are the same as in Table 1. * 4 amount of phosphorus included as an oxide in a surface layer region from the brass plated surface of the steel filament to a depth of 5 nm inward in the radial direction of the filament * 5 represented by an index on the basis that adhesive force of Comparative Example 6 is 100 * 6 trade name: MANOBOND C22.5 made by OMGroup Inc. Co content = 22.5% * 7 represented by an index on the basis that adhesive force of Comparative Example 10 is 100 * 8 tire size 185/70R14 | | | | | | | | | |

Comparative Examples 6 and 10 are based on the conventional knowledge wherein a usual rubber composition containing a Co salt as an adhesion promoter is adhered to steel cords usually plated with brass. Also, Comparative Examples 7 and 11 are an example that a rubber composition obtained by removing the Co salt of an adhesion promoter from the recipes of Comparative Examples 6 and 10 is adhered to steel cords, which show that the initial adhesion rate is delayed as compared with Comparative Examples 6 and 10.

Comparative Examples 8 and 9 are an example that the rubber compositions of Comparative Examples 6 and 7 are adhered to steel cords coated with a silane coupling agent containing no metal, respectively, and Comparative Examples 12 and 13 are an example that the rubber compositions of Comparative Examples 10 and 11 are adhered to steel cords coated with a silane coupling agent containing no metal, respectively. They show the same adhesion behavior as in Comparative Examples 6, 7, 10 and 11 except that the initial adhesion rate is somewhat delayed as compared with those of Comparative Examples 6, 7, 10 and 11. Moreover, the delay of the initial adhesion rate is considered due to the fact that the development of the adhesion reaction is delayed by the application of the silane coupling agent. Also, the delay of the initial adhesion rate suggests that the adhesion reaction between rubber and brass plated on the surface of the steel cord through the silane coupling agent does not occur.

On the contrary to Comparative Examples 6-13, Examples 4 and 6 using the steel cords coated with the Co-containing silane coupling agent solution according to the invention are the adhesion with the rubber composition containing no Co salt as an adhesion promoter likewise Comparative Examples 7, 9, 11 and 13, and improve the rubber covering ratio and adhesive force in the resistance to thermal adhesion because Co is removed from the rubber composition while the initial adhesion rate is higher than the adhesion between the steel cord and the rubber composition based on the conventional knowledge of Comparative Examples 6 and 10.

Also, Examples 5 and 7 are the adhesion between the rubber composition containing the Co salt as an adhesion promoter and the steel cords coated with the Co-containing coupling agent likewise Comparative Examples 6 and 10, but improve the initial adhesion rate as compared with Comparative Examples 6 and 10 likewise Examples 4 and 6. However, since the rubber composition contains the Co salt as an adhesion promoter, the resistance to thermal adhesion is lowered as compared with Examples 4 and 6 but is better than those of Comparative Examples 6 and 10. This is considered due to the fact that since the initial adhesion rate of Examples 5 and 7 is fast, a stronger adhesion layer is produced and has a durability somewhat higher than those of Comparative Examples 6 and 10 against the deterioration. Further, the deterioration of the resistance to thermal adhesion due to the presence of the Co-containing silane coupling agent at the adhesion interface is not recognized.

In the evaluation of the tire, the tendency on Comparative Examples 10 and 12 and Example 5 using the Co-compounded rubber composition is substantially the same as in the evaluation result of the rubber-steel cord composite. However, in Comparative Examples 11 and 13 using the rubber composition compounding no Co, the adhesion rate to the vulcanization time of the tire is lacking and the adhesion before the aging is not sufficient, so that the adhesion level is low though the deterioration after the test for the resistance to thermal adhesion is not observed.

As seen from the above results, the steel cords subjected to the treatment with the metal-containing silane coupling agent according to the invention can conduct the adhesion reaction while stably adhering the adhesion promoter to the adhesion interface as compared with the conventional steel cords, so that the improvement of the initial adhesion property can be expected but also the resistance to thermal adhesion can be expected by removing or decreasing the adhesion promoter from the coating rubber.

## Claims

1. A method for vulcanization-adhering a rubber composition to an adherent made of a brass or plated with a brass, **characterized in that** a rubber composition comprising a rubber component made from natural rubber and/or synthetic rubber and sulfur is applied onto an adherent made of a brass or plated with a brass and subjected to a surface treatment with a solution of a metal-containing silane coupling agent and adhered thereto by heating under pressure.

2. A vulcanization adhesion method according to claim 1, wherein the metal included in the silane coupling agent solution is at least one of Co, Ni, Fe and Zn having a catalytic action to the adhesion reaction between the rubber composition and the brass.

3. A vulcanization adhesion method according to claim 1, wherein a source of the metal used as a starting material of the metal-containing silane coupling agent solution is a compound mainly containing Co or Ni with an oxidation number of 2 as a central metal, which is substantially soluble in a solvent used in the preparation of the solution

4. A vulcanization adhesion method according to claim 1, wherein the silane coupling agent used as a starting material of the metal-containing silane coupling agent solution is a hydrocarbyloxysilane compound represented by the following formula (I): 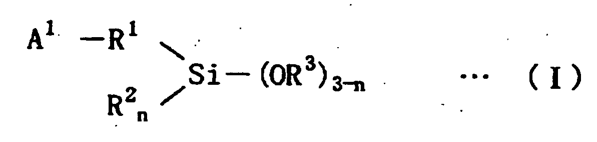 [wherein A¹ is a monovalent group with at least one functional group containing at least one heteroatom selected from oxygen, nitrogen, sulfur and phosphorus and capable of forming a complex or a salt with Co or Ni atom through the heteroatom, R¹ is a single bond or a bivalent inert hydrocarbon group, R² and R³ are independently a monovalent aliphatic hydrocarbon group having a carbon number of 1-20 or a monovalent aromatic hydrocarbon group having a carbon number of 6-18, and n is an integer of 0-2, provided that when plural OR³s are existent, these OR³s may be same or different] and/or a partial condensate thereof.

5. A vulcanization adhesion method according to claim 4, wherein the functional group containing at least one heteroatom selected from oxygen, nitrogen, sulfur and phosphorus and capable of forming a complex or a salt with Co or Ni atom through the heteroatom is at least one selected from an alcohol, a thiol, a (thio)epoxy, a (thio)isocyanate, a (thio)ketone, α,γ-diketone, a (thio)aldehyde, a (dithio)carboxylic acid, a (dithio)carboxylic acid ester, a dithiocarbamic acid ester, an alkali metal salt or alkaline earth metal salt of a (thio)carboxylic acid, a carboxylic acid anhydride, a dihydrocarbyl ester of carboxylic acid carbonic acid, a primary amine, a non-cyclic or cyclic secondary amine, a non-cyclic or cyclic tertiary amine, pyridine, an imine, an amide, urea, an amidine, an imidazole, trihydrocarbyl ester of isocyanuric acid, a sulfide and multisulfide, sulfonyl, sulfinyl, nitrile, trihydrocarbylphosphine, trihydrocarbylphosphite and trihydrocarbylphosphate, and R³ in the formula (I) is a hydrocarbon group having a carbon number of 1-3 and n is 0-1.

6. A vulcanization adhesion method according to claim 1, wherein the rubber composition is compounded with sulfur in an amount of 1-8 parts by mass based on 100 parts by mass of a rubber component.

7. A vulcanization adhesion method according to claim 1, wherein the adherent made of the brass or plated with the brass is preferable to have a composition ratio of copper/zinc in the brass of 58%/42%-72%/28%.

8. A vulcanization adhesion method according to claim 1 or 6, wherein the rubber composition does not contain a Co metal soap substantially required as an adhesion promoter.

9. A reinforcing member for rubber article, **characterized by** subjecting a steel filament plated with a brass or a steel cord formed by twisting a plurality of such steel filaments to a surface treatment with a solution of a metal-containing silane coupling agent.

10. A reinforcing member for rubber article according to claim 9, wherein a metal included in the metal-containing silane coupling agent solution is at least one of Co, Ni, Fe and Zn.

11. A reinforcing member for rubber article according to claim 9, wherein a source of the metal used as a starting material of the metal-containing silane coupling agent solution is a compound mainly containing Co or Ni with an oxidation number of 2 as a central metal, which is substantially soluble in a solvent used in the preparation of the solution.

12. A reinforcing member for rubber article according to claim 9, wherein the silane coupling agent used as a starting material of the metal-containing silane coupling agent solution is a hydrocarbyloxysilane compound represented by the formula (I) and/or a partial condensate thereof.

13. A reinforcing member for rubber article according to claim 12, wherein the functional group containing at least one heteroatom selected from oxygen, nitrogen, sulfur and phosphorus and capable of forming a complex or a sat with Co or Ni atom through the heteroatom is at least one selected from an alcohol, a thiol, a (thio)epoxy, a (thio)isocyanate, a (thio)ketone, α,γ-diketone, a (thio)aldehyde, a (dithio)carboxylic acid, a (dithio)carboxylic acid ester, a dithiocarbamic acid ester, an alkali metal salt or alkaline earth metal salt of a (thio)carboxylic acid, a carboxylic acid anhydride, a dihydrocarbyl ester of carboxylic acid carbonic acid, a primary amine, a non-cyclic or cyclic secondary amine, a non-cyclic or cyclic tertiary amine, pyridine, an imine, an amide, urea, an amidine, an imidazole, trihydrocarbyl ester of isocyanuric acid, a sulfide and multisulfide, sulfonyl, sulfinyl, nitrile, trihydrocarbylphosphine, trihydrocarbylphpsphite and trihydrocarbylphosphate, and R³ in the formula (I) is a hydrocarbon group having a carbon number of 1-3 and n is 0-1.

14. A reinforcing member for rubber article according to claim 9, wherein the brass plated layer in the steel filament is preferable to have a composition ratio of copper/zinc of 58%/42%-72%/28%.

15. A reinforcing member for rubber article according to claim 9, wherein the brass plated layer in the steel filament is preferable to have an average thickness of 0.13 µm-0.35 µm.

16. A reinforcing member for rubber article according to claim 9, wherein an amount of phosphorus included as an oxide in a surface layer region of the steel filament ranging from the brass plated surface to a depth of 5 nm inward in the radial direction of the filament is suppressed to not more than 1.5 atomic%.

17. A reinforcing member for rubber article according to claim 9, wherein the steel filament is preferable to have a diameter of not more than 0.40 mm.

18. A rubber-reinforcing member composite formed by coating a reinforcing member for rubber article as claimed in any one of claims 9-17 with a rubber composition comprising 1-8 parts by mass of sulfur based on 100 parts by mass of a rubber component made from natural rubber and/or synthetic rubbers.

19. A rubber-reinforcing member composite according to claim 18, wherein not less than 50% by mass of the rubber component in the rubber composition is natural rubber.

20. A rubber-reinforcing member composite according to claim 18, wherein the synthetic rubber in the rubber component of the rubber composition is at least one selected from the group consisting of styrene-butadiene rubber, butadiene rubber, butyl rubber, halogenated butyl rubber, butyl rubber having a paramethylstyrene group, ethylene-propylene-diene rubber and isoprene rubber.

21. A rubber-reinforcing member composite according to claim 20, wherein the styrene-butadiene rubber is a solution-polymerized styrene-butadiene rubber having a vinyl bond content in butadiene portion of 35-85% by mass and a bound styrene content of not more than 30% by mass.

22. A rubber-reinforcing member composite according to claim 20, wherein the butadiene rubber has a vinyl bond content of 1-85% by mass.

23. A pneumatic tire comprising a carcass comprised of one or more carcass plies and a belt disposed at an outside of the carcass in a radial direction and comprised of one or more belt layers and further optionally contains one or more chafers, an insert, a cap and a layer, in which the rubber-reinforcing member composite as claimed in claim 18 is applied to at least one of the carcass plies and belt layers, or the rubber-reinforcing member composite as claimed in claim 18 is further provided as at least one of the chafers, insert, cap and layer.

## Patentansprüche

1. Verfahren zum Befestigen durch Vulkanisieren einer Kautschukzusammensetzung an einen Adhärenten, der aus Messing besteht oder mit Messing plattiert ist, **dadurch gekennzeichnet, dass** eine Kautschukzusammensetzung, die eine Kautschukkomponente umfasst, die aus Naturkautschuk und/oder Synthesekautschuk und Schwefel hergestellt ist, auf einen Adhärenten aufgebracht wird, der aus Messing besteht oder mit Messing plattiert ist und einer Oberflächenbehandlung mit einer Lösung eines metallhaltigen Silankopplungsmittels unterworfen und durch Erhitzen unter Druck daran befestigt wird.

2. Vulkanisierbefestigungsmethode nach Anspruch 1, wobei das Metall, das in der Silankopplungsmittellösung eingeschlossen ist, mindestens eines von Co, Ni, Fe und Zn ist, das eine katalytische Wirkung auf die Haftungsreaktion zwischen der Kautschukzusammensetzung und dem Messing aufweist.

3. Vulkanisierbefestigungsmethode nach Anspruch 1, wobei eine Quelle des Metalls, das als Ausgangsmaterial der metallhaltigen Silankopplungsmittellösung verwendet wird, eine Verbindung ist, die hauptsächlich Co oder Ni mit einer Oxidationszahl von 2 als Zentralmetall enthält, das in einem Lösungsmittel, das bei der Herstellung der Lösung verwendet wird, im Wesentlichen löslich ist.

4. Vulkanisierbefestigungsmethode nach Anspruch 1, wobei das Silankopplungsmittel, das als Ausgangsmaterial der metallhaltigen Silankopplungsmittellösung verwendet wird, eine Hydrocarbyloxysilanverbindung, die durch die folgende Formel (I) dargestellt ist: 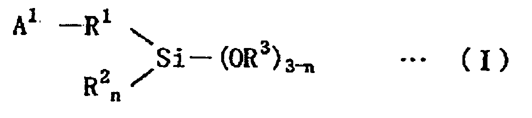 [wobei A¹ eine einwertige Gruppe mit mindestens einer funktionellen Gruppe ist, die mindestens ein Heteroatom enthält ausgewählt unter Sauerstoff, Stickstoff, Schwefel und Phosphor und in der Lage ist, einen Komplex oder ein Salz mit einem Co- oder Ni-Atom durch das Heteroatom zu bilden, R¹ eine Einfachbindung oder eine zweiwertige inerte Kohlenwasserstoffgruppe ist, R² und R³ unabhängig eine einwertige aliphatische Kohlenwasserstoffgruppe mit einer Kohlenstoffzahl von 1-20 oder eine einwertige aromatische Kohlenwasserstoffgruppe mit einer Kohlenstoffzahl von 6-18 sind und n eine ganze Zahl von 0-2 ist, vorausgesetzt, dass, wenn mehrere OR³ vorliegen, diese OR³ gleich oder verschieden sein können] und/oder ein Partialkondensat derselben ist.

5. Vulkanisierbefestigungsmethode nach Anspruch 4, wobei die funktionelle Gruppe, die mindestens ein Heteroatom enthält ausgewählt unter Sauerstoff, Stickstoff, Schwefel und Phosphor und in der Lage ist, einen Komplex oder ein Salz mit einem Co- oder Ni-Atom durch das Heteroatom zu bilden, mindestens ein Bestandteil ist ausgewählt unter einem Alkohol, einem Thiol, einem (Thio)epoxy, einem (Thio)isocyanat, einem (Thio)keton, α,γ-Diketon, einem (Thio)aldehyd, einer (Dithio)carbonsäure, einem (Dithio)carbonsäureester, einem Dithiocarbamidsäureester, einem Alkalimetallsalz oder Erdalkalimetallsalz einer (Thio)carbonsäure, einem Carbonsäureanhydrid, einem Dihydrocarbylester der Carbonsäure, einem primären Amin, einem nichtcyclischen oder cyclischen sekundären Amin, einem nichtcyclischen oder cyclischen tertiären Amin, Pyridin, einem Imin, einem Amid, Harnstoff, einem Amidin, einem Imidazol, Trihydrocarbylester von Isocyanursäure, einem Sulfid und Multisulfid, Sulfonyl, Sulfinyl, Nitril, Trihydrocarbylphosphin, Trihydrocarbylphosphit und Trihydrocarbylphosphat und R³ in der Formel (I) eine Kohlenwasserstoffgruppe ist, die eine Kohlenstoffzahl von 1-3 aufweist und n 0-1 beträgt.

6. Vulkanisierbefestigungsmethode nach Anspruch 1, wobei die Kautschukzusammensetzung mit Schwefel in einer Menge von 1-8 Massenteilen, auf 100 Massenteile einer Kautschukkomponente bezogen, compoundiert ist.

7. Vulkanisierbefestigungsmethode nach Anspruch 1, wobei der Adhärent, der aus Messing besteht oder mit Messing plattiert ist, bevorzugt ein Zusammensetzungsverhältnis von Kupfer/Zink im Messing von 58%/42% - 72%/28% aufweist.

8. Vulkanisierbefestigungsmethode nach Anspruch 1 oder 6, wobei die Kautschukzusammensetzung keine Co-Metallseife enthält, die im Wesentlichen als Haftungspromotor erforderlich ist.

9. Verstärkungsteil für einen Kautschukartikel, **gekennzeichnet durch** Unterwerfen eines Stahlfilaments, das mit Messing plattiert ist, oder eines Stahlcords, der **durch** Verdrehen mehrerer derartiger Stahlfilamente gebildet wird, einer Oberflächenbehandlung mit einer Lösung eines metallhaltigen Silankopplungsmittels.

10. Verstärkungsteil für Kautschukartikel nach Anspruch 9, wobei ein Metall, das in die metallhaltige Silankopplungsmittellösung eingearbeitet ist, mindestens eines von Co, Ni, Fe und Zn ist.

11. Verstärkungsteil für Kautschukartikel nach Anspruch 9, wobei eine Quelle des Metalls, das als Ausgangsmaterial der metallhaltigen Silankopplungsmittellösung verwendet wird, eine Verbindung ist, die hauptsächlich Co oder Ni mit einer Oxidationszahl von 2 als Zentralmetall enthält, das im Wesentlichen in einem Lösungsmittel, das bei der Herstellung der Lösung verwendet wird, löslich ist.

12. Verstärkungsteil für Kautschukartikel nach Anspruch 9, wobei das Silankopplungsmittel, das als Ausgangsmaterial der metallhaltigen Silankopplungsmittellösung verwendet wird, eine Hydroxycarbyloxysilanverbindung, die durch die Formel (I) dargestellt ist, und/oder ein Teilkondensat derselben ist.

13. Verstärkungsteil für Kautschukartikel nach Anspruch 12, wobei die funktionelle Gruppe, die mindestens ein Heteroatom enthält ausgewählt unter Sauerstoff, Stickstoff, Schwefel und Phosphor und in der Lage ist, einen Komplex oder ein Salz mit einem Co- oder Ni-Atom durch das Heteroatom zu bilden, mindestens ein Bestandteil ist ausgewählt unter einem Alkohol, einem Thiol, einem (Thio)epoxy, einem (Thio)isocyanat, einem (Thio)keton, α,γ-Diketon, einem (Thio)aldehyd, einer (Dithio)carbonsäure, einem (Dithio)carbonsäureester, einem Dithiocarbamidsäureester, einem Alkalimetallsalz oder Erdalkalimetallsalz einer (Thio)carbonsäure, einem Carbonsäureanhydrid, einem Dihydrocarbylester der Carbonsäure, einem primären Amin, einem nichtcyclischen oder cyclischen sekundären Amin, einem nichtcyclischen oder cyclischen tertiären Amin, Pyridin, einem Imin, einem Amid, Harnstoff, einem Amidin, einem Imidazol, Trihydrocarbylester von Isocyanursäure, einem Sulfid und Multisulfid, Sulfonyl, Sulfinyl, Nitril, Trihydrocarbylphosphin, Trihydrocarbylphosphit und Trihydrocarbylphosphat und R³ in der Formel (I) eine Kohlenwasserstoffgruppe ist, die eine Kohlenstoffzahl von 1-3 aufweist und n 0-1 beträgt.

14. Verstärkungsteil für Kautschukartikel nach Anspruch 9, wobei die messingplattierte Schicht in dem Stahlfilament bevorzugt ein Zusammensetzungsverhältnis von Kupfer/Zink von 58%/42% - 72%/28% aufweisen soll.

15. Verstärkungsteil für Kautschukartikel nach Anspruch 9, wobei die messingplattierte Schicht in dem Stahlfilament bevorzugt eine durchschnittliche Dicke von 0,13 µm - 0,35 µm aufweisen soll.

16. Verstärkungsteil für Kautschukartikel nach Anspruch 9, wobei eine Menge an Phosphor, die als Oxid in einer Oberflächenschichtregion des Stahlfilaments im Bereich von der messingplattierten Oberfläche bis zu einer Tiefe von 5 nm nach innen in Radialrichtung des Filaments eingearbeitet ist, auf nicht mehr als 1,5 Atom-% reduziert wird.

17. Verstärkungsteil für Kautschukartikel nach Anspruch 9, wobei das Stahlfilament bevorzugt einen Durchmesser von nicht mehr als 0,40 mm aufweist.

18. Kautschukverstärkungsteilverbund, der durch Beschichten eines Verstärkungsteils für den Kautschukartikel nach einem der Ansprüche 9-17 mit einer Kautschukzusammensetzung umfassend 1-8 Massenteile Schwefel, auf 100 Massenteile einer Kautschukkomponente bezogen, die aus Naturkautschuk und/oder Synthesekautschuk hergestellt ist, gebildet wird.

19. Kautschukverstärkungsteilverbund nach Anspruch 18, wobei nicht weniger als 50 Massen-% der Kautschukkomponente in der Kautschukzusammensetzung Naturkautschuk sind.

20. Kautschukverstärkungsteilverbund nach Anspruch 18, wobei der Synthesekautschuk in der Kautschukkomponente der Kautschukzusammensetzung mindestens einer ist ausgewählt aus der Gruppe bestehend aus Styrol-Butadien-Kautschuk, Butadien-Kautschuk, Butyl-Kautschuk, halogeniertem Butyl-Kautschuk, Butyl-Kautschuk mit einer Paramethylstyrolgruppe, Ethylen-Propylen-Dien-Kautschuk und Isopren-Kautschuk.

21. Kautschukverstärkungsteilverbund nach Anspruch 20, wobei der Styrol-Butadien-Kautschuk ein lösungspolymerisierter Styrol-Butadien-Kautschuk mit einem Vinylbindungsgehalt im Butadienanteil von 35-85 Massen-% und einen Gehalt an gebundenem Styrol von nicht mehr als 30 Massen-% aufweist.

22. Kautschukverstärkungsteilverbund nach Anspruch 20, wobei der Butadien-Kautschuk einen Vinylbindungsgehalt von 1-85 Massen-% aufweist.

23. Luftreifen umfassend eine Karkasse bestehend aus einer oder mehreren Karkassencordlagen und einem Gürtel, der sich an der Außenseite der Karkasse in Radialrichtung befindet und aus einem oder mehreren Gürtelschichten besteht und des Weiteren wahlweise enthaltend ein oder mehrere Wulstschutzbänder, eine Einlage, eine Kappe und eine Schicht, in der der Kautschukverstärkungsteilverbund nach Anspruch 18 auf mindestens eine der Karkassencordlagen und Gürtelschichten aufgebracht ist oder der Kautschukverstärkungsteilverbund nach 18 des Weiteren mit mindestens einem der Wulstschutzbänder, Einlage, Kappe und Schicht ausgestattet ist.

## Revendications

1. Procédé pour coller par vulcanisation une composition de caoutchouc à une surface à coller faite de laiton ou plaquée avec du laiton, **caractérisé en ce qu'**une composition de caoutchouc comprenant un constituant de caoutchouc fait d'un caoutchouc naturel et/ou d'un caoutchouc synthétique et de soufre est appliquée sur une surface à coller faite de laiton ou plaquée avec du laiton et soumise à un traitement de surface avec une solution d'un agent de couplage silane contenant un métal et collée à celui-ci par chauffage sous pression.

2. Procédé d'adhésion par vulcanisation selon la revendication 1, dans lequel le métal inclus dans la solution d'agent de couplage silane est au moins l'un parmi Co, Ni, Fe et Zn ayant une action catalytique sur la réaction d'adhésion entre la composition de caoutchouc et le laiton.

3. Procédé d'adhésion par vulcanisation selon la revendication 1, dans lequel une source du métal utilisé en tant que matière de départ de la solution d'agent de couplage silane contenant un métal est un composé contenant principalement Co ou Ni ayant un nombre d'oxydation de 2 en tant que métal central, qui est essentiellement soluble dans un solvant utilisé dans la préparation de la solution.

4. Procédé d'adhésion par vulcanisation selon la revendication 1, dans lequel l'agent de couplage silane utilisé en tant que matière de départ de la solution d'agent de couplage silane contenant un métal est un composé hydrocarbyloxysilane représenté par la formule (I) suivante: 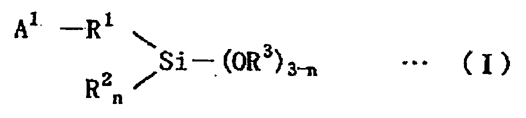 [dans laquelle A¹ est un groupe monovalent ayant au moins un groupe fonctionnel contenant au moins un hétéroatome choisi parmi l'oxygène, l'azote, le soufre et le phosphore et apte à former un complexe ou un sel avec un atome de Co ou Ni par l'intermédiaire de l'hétéroatome, R¹ est une liaison simple ou un groupe hydrocarboné bivalent inerte, R² et R³ sont indépendamment un groupe hydrocarboné monovalent aliphatique ayant un nombre de carbones de 1 à 20 ou un groupe hydrocarboné monovalent aromatique ayant un nombre de carbones de 6 à 18, et n est un entier de 0 à 2, étant entendu que, lorsque plusieurs OR³ existent, ces OR³ peuvent être identiques ou différents] et/ou un condensat partiel de celui-ci.

5. Procédé d'adhésion par vulcanisation selon la revendication 4, dans lequel le groupe fonctionnel contenant au moins un hétéroatome choisi parmi l'oxygène, l'azote, le soufre et le phosphore et apte à former un complexe ou un sel avec un atome de Co ou Ni par l'intermédiaire de l'hétéroatome est au moins un ingrédient choisi parmi un alcool, un thiol, un (thio)époxy, un (thio)isocyanate, une (thio)cétone, une α,γ-dicétone, un (thio)aldéhyde, un acide (dithio)carboxylique, un ester d'acide (dithio)carboxylique, un ester d'acide dithiocarbamique, un sel de métal alcalin ou un sel de métal alcalino-terreux d'un acide (thio)carboxylique, un anhydride d'acide carboxylique, un ester dihydrocarbylique d'acide carboxylique, une amine primaire, une amine secondaire non cyclique ou cyclique, une amine tertiaire non cyclique ou cyclique, la pyridine, une imine, un amide, l'urée, une amidine, un imidazole, un ester trihydrocarbylique d'acide isocyanurique, un sulfure et un multisulfure, un sulfonyle, un sulfinyle, un nitrile, une trihydrocarbylphosphine, un trihydrocarbylphosphite et un trihydrocarbylphosphate, et R³ dans la formule (I) est un groupe hydrocarboné ayant un nombre de carbones de 1 à 3 et n est 0-1.

6. Procédé d'adhésion par vulcanisation selon la revendication 1, dans lequel la composition de caoutchouc est mélangée avec du soufre en une quantité de 1 à 8 parties en masse sur la base de 100 parties en masse d'un constituant de caoutchouc.

7. Procédé d'adhésion par vulcanisation selon la revendication 1, dans lequel la surface à coller faite de laiton ou plaquée avec du laiton a de préférence un rapport de composition de cuivre/zinc dans le laiton de 58%/42% à 72%/28%.

8. Procédé d'adhésion par vulcanisation selon la revendication 1 ou 6, dans lequel la composition de caoutchouc ne contient pas de savon métallique Co essentiellement requis en tant que promoteur d'adhésion.

9. Elément renforçant pour article en caoutchouc, **caractérisé par** la soumission d'un filament d'acier plaqué avec du laiton ou d'un câblé d'acier formé en torsadant une pluralité de tels filaments d'acier, à un traitement de surface avec une solution d'un agent de couplage silane contenant un métal.

10. Elément renforçant pour article en caoutchouc selon la revendication 9, dans lequel un métal inclus dans la solution d'agent de couplage silane contenant un métal est au moins l'un parmi Co, Ni, Fe et Zn.

11. Elément renforçant pour article en caoutchouc selon la revendication 9, dans lequel une source du métal utilisé en tant que matière de départ de la solution d'agent de couplage silane contenant un métal est un composé contenant principalement Co ou Ni ayant un nombre d'oxydation de 2 en tant que métal central, qui est essentiellement soluble dans un solvant utilisé dans la préparation de la solution.

12. Elément renforçant pour article en caoutchouc selon la revendication 9, dans lequel l'agent de couplage silane utilisé en tant que matière de départ de la solution d'agent de couplage silane contenant un métal est un composé hydrocarbyloxysilane représenté par la formule (I) et/ou un condensat partiel de celui-ci.

13. Elément renforçant pour article en caoutchouc selon la revendication 12, dans lequel le groupe fonctionnel contenant au moins un hétéroatome choisi parmi oxygène, l'azote, le soufre et le phosphore et apte à former un complexe ou un sel avec un atome de Co ou Ni par l'intermédiaire de l'hétéroatome est au moins un ingrédient choisi parmi un alcool, un thiol, un (thio)époxy, un (thio)isocyanate, une (thio)cétone, une α,γ-dicétone, un (thio)aldéhyde, un acide (dithio)carboxylique, un ester d'acide (dithio)carboxylique, un ester d'acide dithiocarbamique, un sel de métal alcalin ou un sel de métal alcalino-terreux d'un acide (thio)carboxylique, un anhydride d'acide carboxylique, un ester dihydrocarbylique d'acide carboxylique, une amine primaire, une amine secondaire non cyclique ou cyclique, une amine tertiaire non cyclique ou cyclique, la pyridine, une imine, un amide, l'urée, une amidine, un imidazole, un ester trihydrocarbylique d'acide isocyanurique, un sulfure et un multisulfure, un sulfonyle, un sulfinyle, un nitrile, une trihydrocarbylphosphine, un trihydrocarbylphosphite et un trihydrocarbylphosphate, et R³ dans la formule (I) est un groupe hydrocarboné ayant un nombre de carbones de 1 à 3 et n est 0-1.

14. Elément renforçant pour article en caoutchouc selon la revendication 9, dans lequel la couche plaquée de laiton dans le filament d'acier a de préférence un rapport de composition de cuivre/zinc de 58%/42% à 72%/28%.

15. Elément renforçant pour article en caoutchouc selon la revendication 9, dans lequel la couche plaquée de laiton dans le filament d'acier a de préférence une épaisseur moyenne de 0,13 µm à 0,35 µm.

16. Elément renforçant pour article en caoutchouc selon la revendication 9, dans lequel une quantité de phosphore inclus sous la forme d'un oxyde dans une région de la couche de surface du filament d'acier allant de la surface plaquée de laiton jusqu'à une profondeur de 5nm vers l'intérieur dans la direction radiale du filament est limitée à pas plus de 1,5% atomique.

17. Elément renforçant pour article en caoutchouc selon la revendication 9, dans lequel le filament d'acier a de préférence un diamètre non supérieur à 0,40mm.

18. Composite à élément renforçant pour caoutchouc, formé en revêtant un élément renforçant pour article en caoutchouc selon l'une quelconque des revendications 9 à 17 avec une composition de caoutchouc comprenant 1 à 8 parties en masse de soufre pour 100 parties en masse d'un constituant caoutchouc fait de caoutchouc naturel et/ou de caoutchoucs synthétiques.

19. Composite à élément renforçant pour caoutchouc selon la revendication 18, dans lequel pas moins de 50% en masse du constituant caoutchouc dans la composition de caoutchouc est du caoutchouc naturel.

20. Composite à élément renforçant pour caoutchouc selon la revendication 18, dans lequel le caoutchouc synthétique dans le constituant caoutchouc de la composition de caoutchouc est au moins un ingrédient choisi dans le groupe constitué par un caoutchouc styrène-butadiène, un caoutchouc de butadiène, un caoutchouc butyle, un caoutchouc butyle halogéné, un caoutchouc butyle ayant un groupe paraméthylstyrène, un caoutchouc éthylène-propylène-diène et un caoutchouc isoprène.

21. Composite à élément renforçant pour caoutchouc selon la revendication 20, dans lequel le caoutchouc styrène-butadiène est un caoutchouc styrène-butadiène polymérisé en solution ayant une teneur en liaison vinyle dans la partie butadiène de 35 à 85% en masse et une teneur en styrène lié non supérieure à 30% en masse.

22. Composite à élément renforçant pour caoutchouc selon la revendication 20, dans lequel le caoutchouc butadiène a une teneur en liaison vinyle de 1 à 85% en masse.

23. Pneumatique comprenant une carcasse composée d'un ou plusieurs plis de carcasse et une ceinture disposée à l'extérieur de la carcasse dans une direction radiale et composée d'une ou plusieurs couches de ceinture et qui contient en outre facultativement une ou plusieurs bandes de renfort, un insert, une chape et une couche, dans lequel le composite à élément renforçant pour caoutchouc selon la revendication 18 est appliqué sur au moins l'un des plis de carcasse et couches de ceinture, ou le composite à élément renforçant pour caoutchouc selon la revendication 18 est en outre fourni sous la forme d'au moins l'un parmi les bandes de renfort, l'insert, la chape et la couche.
